# EUROPEAN PATENT APPLICATION

(11) **EP 4 342 825 A1**
(43) Date of publication of application: **27.03.2024**
(21) Application number: 22880395.3
(22) Date of filing: 13.10.2022
(51) Int. Cl.: B65G 1/137, B65G 1/12

(54) **WAREHOUSING SYSTEM AND CONTROL METHOD THEREFOR**

(30) Priority: 15.10.2021 CN 202111204450; 15.10.2021 CN 202122497033 U; 26.10.2021 CN 202111249466; 26.10.2021 CN 202122589108 U
(71) Applicant: Beijing Geekplus Technology Co., Ltd., Chaoyang District Beijing 100102 (CN)
(72) Inventor: WANG, Xu, Beijing 100102 (CN); WANG, Mengdi, Beijing 100102 (CN); MA, Yingpeng, Beijing 100102 (CN)
(74) Representative: Manna, Sara
(86) International application number: PCT/CN2022/125217
(87) International publication number: WO 2023/061459

(57) **Abstract**

The present disclosure provides a warehousing system and a control method therefor. According to the warehousing system of the present disclosure, a container meeting a preset condition can be cached in a multifunctional area in advance on the basis of information such as the demand frequency of target goods on an order; when a sorting order related to the preset condition is received, there is no need to call an automatic carrying device to carry a goods shelf with the corresponding container, and a container loading and unloading device only needs to transfer the corresponding container to a sorting station from the multifunctional area; and after sorting is completed, the container loading and unloading device puts the container back to the multifunctional area, such that the workload of the automatic carrying device can be reduced.

## Description

### CROSS-REFERENCE TO RELATED APPLICATIONS

This disclosure claims the priority of Chinese patent application No. 202111204450.9 filed with the China National Intellectual Property Administration on October 15, 2021 and entitled "WAREHOUSING SYSTEM AND CONTROL METHOD THEREOF", the priority of Chinese patent application No. 202111249466.1 filed with the China National Intellectual Property Administration on October 26, 2021 and entitled "WAREHOUSING SYSTEM AND CONTROL METHOD THEREOF", the priority of Chinese patent application No. 202122497033.X filed with the China National Intellectual Property Administration on October 15, 2021 and entitled "WAREHOUSING SYSTEM", and the priority of Chinese patent application No. 202122589108.7 filed with the China National Intellectual Property Administration on October 26, 2021 and entitled "WAREHOUSING SYSTEM", the contents of which are incorporated by reference herein in their entireties as part of this disclosure.

### TECHNICAL FIELD

The present disclosure relates to the technical field of warehouse logistics, and particularly relates to a warehousing system and a control method thereof.

### BACKGROUND

With the increasing development of e-commerce, a technology of automatic handling of goods in warehousing logistics is also becoming increasingly mature.

At present, the warehousing system at least includes goods shelves, an automatic handling device, and sorting stations. The goods shelves are temporarily stored in a material shelf storage area of a warehouse, and the sorting station is arranged in a goods sorting area of the warehouse.

When the sorting station receives order information, the sorting station calls the automatic handling device to move a goods shelf with target goods in the order information from the goods shelf storage area to the sorting station, and then controls a container loading and unloading device to transfer a target container on the goods shelf to the sorting station.

It can be seen from the above that the sorting station would call the automatic handling device to move the goods shelf with the target container to the sorting station at each time of receiving the order information. The automatic handling device needs to be ready at any time to move goods shelves.

In view of this, how to reduce the number of times of moving by the automatic handling device is a technical problem that needs to be solved by those skilled in the art.

### SUMMARY

In order to solve the problems in the prior art, the present disclosure provides a warehousing system and a control method thereof.

In a first aspect, the present disclosure provides a warehousing system. The warehousing system of the present disclosure includes: a workstation area including at least one sorting station; a goods shelf parking area configured to park a goods shelf; a multifunctional area including at least one storage position, and the storage position being configured to store a container transferred from the sorting station or the goods shelf; and a container loading and unloading device configured to transfer the container among the workstation area, the goods shelf parking area, and the multifunctional area.

In one embodiment, the multifunctional area is located above, below or next to the sorting station.

In one embodiment, the storage position is configured to store the container; and a demand frequency of goods in the container within a preset time period exceeds a demand frequency threshold.

In one embodiment, the storage position of the multifunctional area is configured to store the container; and goods in the container are associated with designated goods.

In one embodiment, the multifunctional area is configured to store the container; sorting of goods in the container has been completed; and the container loading and unloading device is not free to transfer the container.

In one embodiment, the multifunctional area is configured to store the container; sorting of goods in the container has been completed; and a goods shelf for storing the container has not yet reached the goods shelf parking area.

In one embodiment, the multifunctional area is configured to store the container; sorting of goods in the container has been completed; and the goods are selected in an order to be sorted.

In one embodiment, the container loading and unloading device is further configured to perform a tallying operation.

In one embodiment, within a preset time period, when a demand frequency of goods in a first container is greater than a demand frequency of goods in a second container, and a position of the second container on the goods shelf is more convenient for fetching and placing than the first container; the container loading and unloading device is configured to move the second container from the goods shelf to the multifunctional area for temporary storage, transfers the first container from a current position to an original position of the second container, and transfers the second container from the multifunctional area to an original position of the first container.

In one embodiment, when a demand frequency of goods in the container within a preset time period exceeds a demand frequency threshold; the container loading and unloading device is configured to transfer the container from a current goods shelf to a new goods shelf, and the new goods shelf is configured to specially store the container in which the demand frequency of the goods within the preset time period exceeds the demand frequency threshold.

In one embodiment, the container loading and unloading device is configured to put an empty container back to a goods shelf for storing empty containers or the multifunctional area.

In one embodiment, the multifunctional area includes a plurality of storage positions; the plurality of storage positions are arranged at intervals in a height direction, arranged at intervals in a horizontal direction, or arranged at intervals in both the height direction and the horizontal direction.

In one embodiment, the warehousing system further includes an automatic handling device; and the automatic handling device is configured to move the goods shelf into or out of the goods shelf parking area.

In one embodiment, the warehousing system includes a plurality of sorting stations; and the plurality of sorting stations are arranged at intervals in a horizontal direction.

In one embodiment, the sorting station includes a first supporting frame and a first guide mechanism arranged on the first supporting frame; and the first guide mechanism is configured to assist the container loading and unloading device in fetching and placing the container.

In one embodiment, the storage position includes a second supporting frame and a second guide mechanism arranged on the second supporting frame; and the second guide mechanism is configured to assist the container loading and unloading device in fetching and placing the container.

In one embodiment, the container loading and unloading device includes a portal frame and a loading and unloading component; the loading and unloading component is arranged on the portal frame; and the loading and unloading component is configured to move in an X-axis direction and a Y-axis direction relative to the portal frame; or, the loading and unloading component is configured to move in a Z-axis direction and the Y-axis direction relative to the portal frame; or, the loading and unloading component is configured to move in the X-axis direction, the Y-axis direction, and the Z-axis direction relative to the portal frame; a direction of a vertical distance between the sorting station and the goods shelf is denoted as the Y-axis direction; a direction perpendicular to a Y axis in a horizontal plane is denoted as the X-axis direction; and a direction perpendicular to the horizontal plane is denoted as the Z-axis direction.

In one embodiment, the loading and unloading component is configured to move in the X-axis direction, the Y-axis direction, and the Z-axis direction relative to the portal frame, and the container loading and unloading device further includes a movable vertical column arranged on the portal frame and configured to be controlled by an X-axis driving mechanism to move in the X-axis direction relative to the portal frame; and the loading and unloading component is arranged on the movable vertical column and is configured to be controlled by a Z-axis driving mechanism to move in the Z-axis direction relative to the movable vertical column.

In one embodiment, the loading and unloading component includes: a base arranged on the movable vertical column; and a loading and unloading component arranged on the base and configured to be controlled by a Y-axis driving mechanism to move in the Y-axis direction relative to the base.

In one embodiment, the container loading and unloading device further includes: an X-axis guide mechanism arranged on the portal frame and configured to guide the movable vertical column to move in the X-axis direction relative to the portal frame; and/or, a Z-axis guide mechanism arranged on the movable vertical column and configured to guide the loading and unloading component to move in the Z-axis direction relative to the movable vertical column.

In one embodiment, the multifunctional area is configured to store an empty container; and the container loading and unloading device is configured to transfer the empty container of the multifunctional area to the sorting station in case of shelving of a full container load or a shortage of externally supplied containers.

In a second aspect, the present disclosure provides a control method of a warehousing system. The warehousing system is the warehousing system according to any one of the above embodiments. The control method includes: transferring, by the container loading and unloading device, a target container satisfying a preset attribute among the workstation area, the goods shelf parking area, and the multifunctional area on the basis of the preset attribute.

In one embodiment, the transferring, by the container loading and unloading device, the target container satisfying the preset attribute among the workstation area, the goods shelf parking area, and the multifunctional area includes: when a demand frequency of goods in the container within a preset time period exceeds a demand frequency threshold, transferring, by the container loading and unloading device, the container from the goods shelf in the goods shelf parking area to the multifunctional area; and when an instruction of sorting the goods is received, transferring, by the container loading and unloading device, the container from the multifunctional area to the sorting station.

In one embodiment, the transferring, by the container loading and unloading device, the target container satisfying the preset attribute among the workstation area, the goods shelf parking area, and the multifunctional area includes: when a first container accommodates an item associated with designated goods, transferring, by the container loading and unloading device, the first container from the goods shelf to the multifunctional area for temporary storage; when an instruction of sorting the designated goods is received, transferring, by the container loading and unloading device, the first container from the multifunctional area to the sorting station; and transferring, by the container loading and unloading device, a second container storing the designated goods from the goods shelf in the goods shelf parking area to the sorting station.

In one embodiment, the transferring, by the container loading and unloading device, the target container satisfying the preset attribute among the workstation area, the goods shelf parking area, and the multifunctional area includes: when sorting of goods in the container is completed, and the container loading and unloading device is not free to transfer the container, storing the container in the multifunctional area.

In one embodiment, the transferring, by the container loading and unloading device, the target container satisfying the preset attribute among the workstation area, the goods shelf parking area, and the multifunctional area includes: when sorting is completed, and a goods shelf for placing the container has not yet reached the goods shelf parking area, storing, by the container loading and unloading device, the container in the multifunctional area.

In one embodiment, the transferring, by the container loading and unloading device, the target container satisfying the preset attribute among the workstation area, the goods shelf parking area, and the multifunctional area includes: when the container loading and unloading device is free, performing a tallying operation by the container loading and unloading device.

In one embodiment, a method for performing the tallying operation by the container loading and unloading device includes: within a preset time period, when a demand frequency of goods in a first container is greater than a demand frequency of goods in a second container, and a position of the second container on the goods shelf is more convenient for fetching and placing than the first container, first moving, by the container loading and unloading device, the second container from the goods shelf to the multifunctional area for temporary storage; transferring, by the container loading and unloading device, the first container from a current position to an original position of the second container; and transferring, by the container loading and unloading device, the second container from the multifunctional area to an original position of the first container.

In one embodiment, a method for performing the tallying operation by the container loading and unloading device includes: within a preset time period, when a demand frequency of goods in the container exceeds a demand frequency threshold, transferring, by the container loading and unloading device, the container from a current goods shelf to a new goods shelf, where the new goods shelf is configured to specially store the container in which the demand frequency of the goods within the preset time period exceeds the demand frequency threshold.

In one embodiment, a method for performing the tallying operation by the container loading and unloading device includes: within a preset time period, when a demand frequency of goods in the container exceeds a preset degree threshold, transferring, by the container loading and unloading device, the container from the multifunctional area to a new goods shelf, where the new goods shelf is configured to specially store the container in which the demand frequency of the goods within the preset time period exceeds the demand frequency threshold.

In one embodiment, the transferring, by the container loading and unloading device, the target container satisfying the preset attribute among the workstation area, the goods shelf parking area, and the multifunctional area includes: when the multifunctional area stores an empty container, and an instruction of shelving a full container load or an alarm of a shortage of externally supplied containers is received, transferring, by the container loading and unloading device, the empty container of the multifunctional area to the sorting station.

In one embodiment, the transferring, by the container loading and unloading device, the target container satisfying the preset attribute among the workstation area, the goods shelf parking area, and the multifunctional area includes: when the container is empty after sorting is completed, transferring, by the container loading and unloading device, the empty container from the sorting station to a new goods shelf, where the new goods shelf is configured to specially store the empty container.

In one embodiment, the transferring, by the container loading and unloading device, the target container satisfying the preset attribute among the workstation area, the goods shelf parking area, and the multifunctional area includes: after sorting of goods in the container is completed, determining whether the goods are selected in an order to be sorted; if the goods are selected in the order to be sorted, transferring, by the container loading and unloading device, the container from the sorting station to the multifunctional area for temporary storage; and after receiving an instruction of sorting the order to be sorted in which the goods are selected, transferring, by the container loading and unloading device, the container from the multifunctional area to the sorting station.

In one embodiment, the warehousing system further includes an automatic handling device; the automatic handling device is configured to move the goods shelf into or out of the goods shelf parking area; and the control method further includes: when one container accommodates an item associated with designated goods, transferring, by the container loading and unloading device, the container from the goods shelf to the multifunctional area for temporary storage; when an instruction of sorting the designated goods is received, transferring, by the container loading and unloading device, the one container from the multifunctional area to the sorting station; and calling the automatic handling device to move a goods shelf storing another container to the goods shelf parking area, and transferring, by the container loading and unloading device, the other container from the goods shelf of the goods shelf parking area to the sorting station, where the other container is configured to accommodate the designated goods.

According to the warehousing system of the present disclosure, a container satisfying a preset condition can be temporarily stored in a multifunctional area in advance on the basis of information such as a demand frequency of target goods on an order; when a sorting order related to the preset condition is received, there is no need to call an automatic handling device to move a goods shelf with corresponding container, and a container loading and unloading device only needs to transfer the corresponding container to a sorting station from the multifunctional area; and after sorting is completed, the container loading and unloading device puts the container back to the multifunctional area, so that the workload of the automatic handling device can be reduced. In addition, in one embodiment, the multifunctional area is located above the sorting station, and the container loading and unloading device can quickly transfer a container, which can greatly improve the sorting efficiency.

In order to make the above objectives, features and advantages of the present disclosure more obvious and easy to understand, preferred embodiments are listed below, and are described in detail as follows in conjunction with the accompanying drawings.

### BRIEF DESCRIPTION OF THE DRAWINGS

In order to more clearly explain the technical solutions of the embodiments of the present disclosure, the following will briefly introduce the drawings required to be used in the embodiments. The drawings here are incorporated into the specification and form a part of the specification. These drawings show embodiments in accordance with the present disclosure, and are used together with the specification to explain the technical solutions of the present disclosure. It should be understood that the following drawings only show some embodiments of the present disclosure, so they should not be regarded as limiting the scope. Those skilled in the art can also obtain other relevant drawings from these drawings without any creative effort.
FIG. 1 is a schematic three-dimensional structural diagram of a specific embodiment of a warehousing system provided according to the present disclosure;
FIG. 2 to FIG. 4 respectively show a front view, a side view, and a top view of a warehousing system shown in FIG. 1; and
FIG. 5 to FIG. 10 respectively show schematic diagrams of control flows of several embodiments of a control method of a warehousing system of the present disclosure.

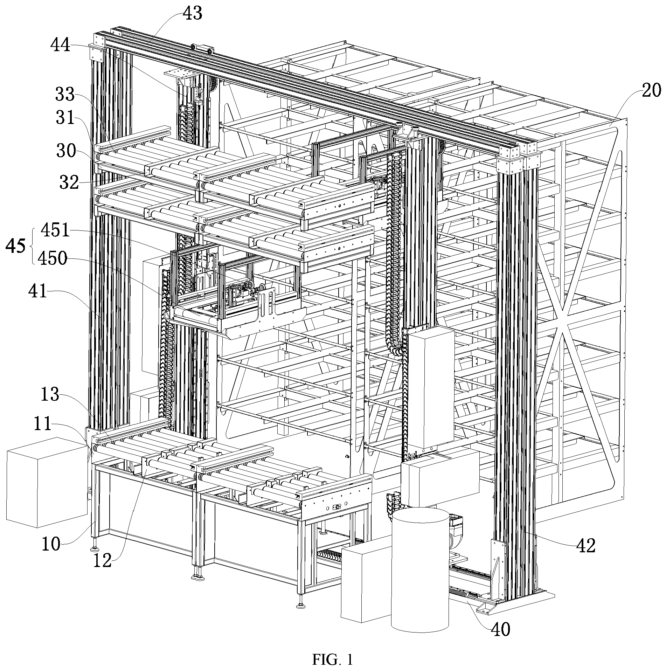

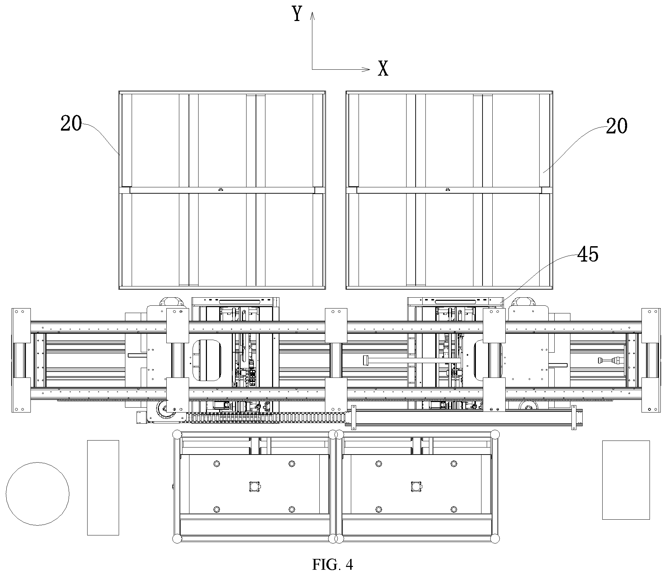

One-to-one correspondence between names of all components and reference signs in FIG. 1 and FIG. 4 are as follows:
sorting station: 10: first stand; 11: first left vertical plate; 12: first right vertical plate; 13: first roller;
goods shelf parking area: 20: goods shelf;
multifunctional area: 30: second stand; 31: second left vertical plate; 32: second right vertical plate; 33: second roller;
container loading and unloading device: 40: pedestal; 41: left vertical column; 42: right vertical column; 43: cross beam; 44: movable vertical column; 45: loading and unloading component; 450: base; and 451: loading and unloading member.

### DETAILED DESCRIPTION

In order to make the objectives, technical solutions and advantages of the embodiments of the present disclosure clearer, the technical solutions in this embodiment of the present disclosure will be described clearly and completely below in combination with the drawings in this embodiment of the present disclosure. Obviously, the embodiments described herein are part of the embodiments of the present disclosure only, not all the embodiments. The components of the embodiments of the present disclosure generally described and shown in the drawings here can be arranged and designed in a variety of different configurations. Therefore, the following detailed description for the embodiments of the present disclosure provided in the accompanying drawings is not intended to limit the scope of the claimed present disclosure, but merely represents selected embodiments of the present disclosure. Based on the embodiments of the present disclosure, all other embodiments obtained by those skilled in the art without creative work shall fall within the protection scope of the present disclosure.

In addition, the terms "first", "second", and the like in the specification and claims of the embodiments of the present disclosure and the above drawings are used to distinguish similar objects, and are not necessarily used to describe a specific sequence or a precedence order. It should be understood that data used in this way is interchangeable under appropriate circumstances so that the embodiments described herein can be implemented in an order other than contents illustrated or described herein.

The "plurality or several" mentioned herein means two or more. "And/or" describes an association relation of associated objects, indicating that there can be three types of relations. For example, A and/or B can mean: A exists alone, A and B exist at the same time, and B exists alone. The character "/" generally indicates that the front and back related objects are in an "or" relationship.

At present, when an existing warehousing system receives an order, the warehousing system calls an automatic handling device, and the automatic handling device transfers a goods shelf from a goods shelf storage area to a sorting station. The goods shelf stores a container with goods in the order. A container loading and unloading device transports the container from the goods shelf to the sorting station for sorting. After a worker completes sorting, the container loading and unloading device places the container back onto the goods shelf, and finally, the automatic handling device transfers the goods shelf from a goods shelf parking area back to the goods shelf storage area.

According to the above, it can be seen that the existing warehousing system needs to call a corresponding goods shelf when receiving every sorting order, which poses a problem of a heavy workload for the automatic handling device. Particularly, the current sorting workstation includes a relatively small number of temporary storage positions. When sorting personnel perform a sorting operation at the workstation, they need to frequently move goods shelves when there are Stock Keeping Units (SKUs) with a high ex-warehouse frequency, such as explosives, bestsellers, and gifts. In addition, the current sorting workstation has a relatively large free space, so that the space utilization rate is low.

For this purpose, the present disclosure provides a warehousing system, the warehousing system includes a workstation area, a goods shelf parking area, a multifunctional area, and a container loading and unloading device. The workstation area includes a sorting station. The goods shelf parking area is configured to park a goods shelf. The multifunctional area includes at least one storage position. The storage position is configured to store a container transported from the sorting station or the goods shelf. The container loading and unloading device is configured to transfer the container among the workstation area, the goods shelf parking area, and the multifunctional area.

It should be noted that the goods shelf in the warehousing system of the present disclosure does not only include a traditional goods shelf, but also includes a pallet, a material storage shelf, or other forms of devices capable of storing goods. The goods shelf can be moved between different areas of a warehouse through an automatic handling device or other mobile devices, which means that the goods shelf is configured to be a mobile vehicle that can be moved between different areas of the warehouse.

Correspondingly, the automatic handling device used for moving a goods shelf in the present disclosure is not an automatic handling device used for moving a traditional goods shelf, but any device capable of moving a goods shelf.

In addition, the container in the present disclosure includes a goods box, a pallet, a supporting plate, a temporary pallet storage shelf, and the like. The goods box includes a storage box and other boxes that can be used for storing different kinds of goods, as well as other special boxes that can accommodate specific goods such as shoe boxes. In terms of material dimensions, the goods box can be a carton box, a plastic box, an iron box, or the like.

According to the warehousing system, a container satisfying a preset condition can be temporarily stored in a multifunctional area in advance on the basis of information such as a demand frequency of target goods on an order within a preset time period; when a sorting order related to the preset condition is received, there is no need to call an automatic handling device to move a goods shelf with corresponding container, and a container loading and unloading device only needs to transfer the corresponding container to a sorting station from the multifunctional area; and after sorting is completed, the container loading and unloading device puts the container back to the multifunctional area, so that the workload of the automatic handling device can be reduced.

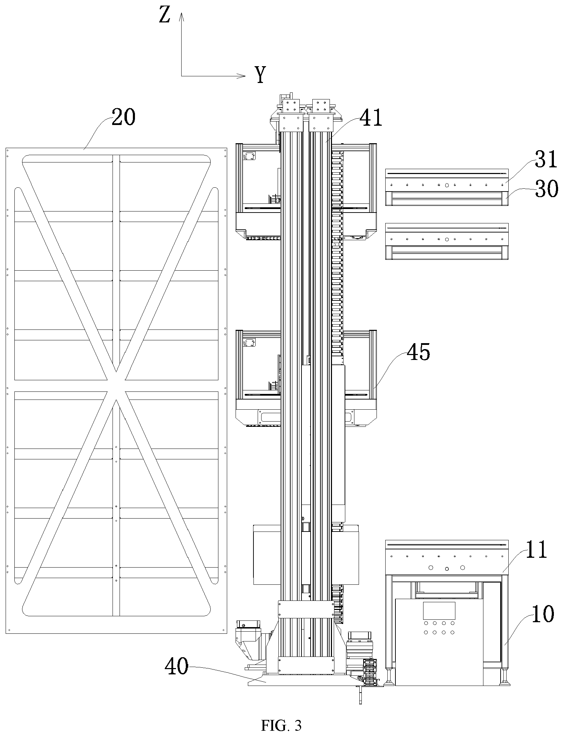

In order to facilitate a better understanding, a specific structure and working principle of the warehousing system will be explained in detail using specific embodiments below in conjunction with FIG. 1 to FIG. 10. It should be noted that for clarity, ordinal words such as "first" and "second" used in the following text are distinguish containers. It can be understood that these ordinal words do not limit the protection scope of the present disclosure.

### Embodiment I of the warehousing system

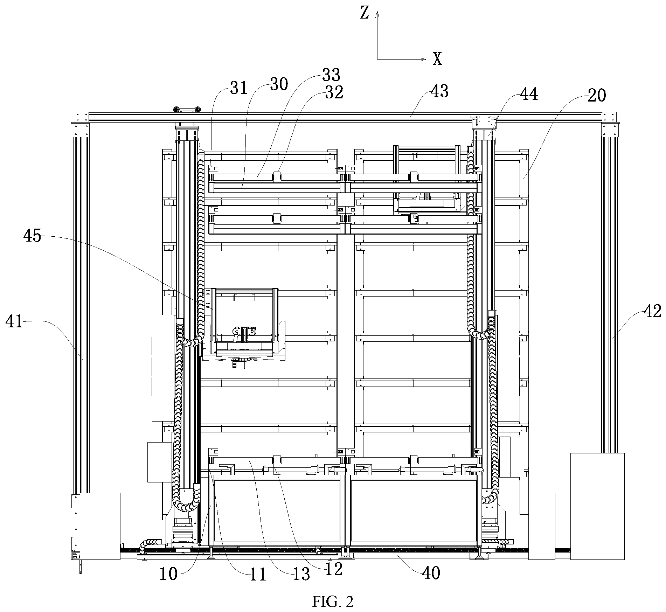

Referring to FIG. 1, in this embodiment, the warehousing system includes a workstation area, a goods shelf parking area, a multifunctional area, and a container loading and unloading device. For convenience of better understanding the specific structure of the warehousing system, please refer to FIG. 2 to FIG. 4.

The workstation area includes at least one sorting station. The sorting station is configured to place a container, so that a worker or a sorting robot sorts out goods meeting an order requirement from the container, and puts the goods onto an automatic handling device or a conveying belt.

Each of the sorting stations includes a first supporting frame and a first guide mechanism arranged on the first supporting frame; and the first guide mechanism is configured to assist the container loading and unloading device in fetching and placing a container.

Detailedly, the first supporting frame includes a first stand 10, a first left vertical plate 11, and a first right vertical plate 12. The first left vertical plate 11 and the first right vertical plate 12 are parallel to each other and are arranged on the first stand 10 at an interval. The first stand 10 has a function of supporting the first left vertical plate 11 and the first right vertical plate 12 to a certain height from the ground, so that the worker or the sorting robot can sort goods.

The first guide mechanism includes a plurality of first rollers 13. The plurality of first rollers 13 are parallel to each other in sequence and are arranged between the first left vertical plate 11 and the first right vertical plate 12 at intervals in a rotatable manner.

After the container loading and unloading device places a container at the sorting station, when the worker or the sorting robot thinks that a current position of the container is not convenient for performing a sorting operation, the worker or the sorting robot can easily push the container from the current position to a position convenient for operation with the help of the rolling characteristic of the first guide mechanism.

The goods shelf parking area is arranged at a position closer to the sorting station, and at least two goods shelves 20 can be placed in the goods shelf parking area, so that the warehousing system can quickly sort more kinds or a larger amount of goods within unit time.

Continuing to refer to FIG. 1, in this embodiment, the warehousing system of this application includes a plurality of sorting stations which are arranged at intervals in sequence in a horizontal direction.

More specifically, the plurality of sorting stations are arranged at intervals in sequence in an X-axis direction. In this way, with the warehousing system, a plurality of workers or sorting robots can sort goods at the same time, and those skilled in the art can infinitely expand the application range of the warehousing system according to application scenarios.

According to some other embodiments of this application, the plurality of sorting stations of this application can also be arranged at intervals in sequence in a Z-axis direction, so that different heights are formed between the respective sorting stations and the ground, which facilitates sorting by workers with different heights, thereby improving the sorting comfort of a worker and also improving the sorting efficiency of a worker.

According to some other embodiments of this application, the plurality of sorting stations of this application can also be arranged in a horizontal plane at intervals in sequence in a Y-axis direction, so that the plurality of workers can sort goods face to face.

Continuing to refer to FIG. 1, the multifunctional area of this application includes a plurality of storage positions, and each of the storage positions includes a second supporting frame and a second guide mechanism arranged on the second supporting frame; and the second guide mechanism is configured to assist the container loading and unloading device in fetching and placing a container.

Detailedly, the second supporting frame includes a second stand 30, a second left vertical plate 31, and a second right vertical plate 32. The second left vertical plate 31 and the second right vertical plate 32 are parallel to each other and are arranged on the second stand 30 at an interval.

The second guide mechanism includes a plurality of second rollers 33. The second rollers 33 are parallel to each other in sequence and are arranged between the second left vertical plate 31 and the second right vertical plate 32 at intervals in a rotatable manner.

The storage position is fixed to a fixing wall of the warehouse through a second stand 30 or to the sorting station through an auxiliary stand, as long as the multifunctional area is located above the sorting station to fully use a free space above the sorting station in the warehouse.

According to some other embodiments of this application, the multifunctional area of this application is arranged below the sorting station, and the second stand 30 is fixed to the ground of the warehouse through fasteners such as chemical bolts.

According to some other embodiments of this application, the multifunctional area of this application is arranged next to the sorting station, which means that the multifunctional area is close to the sorting station. Similarly, the second stand 30 is fixed to the ground of the warehouse through fasteners such as chemical bolts.

Each of the storage positions in this embodiment can be used for storing at least one container. In addition, it should be noted that the above structural form is only one implementation form of the storage position. The storage position can also be of another structure, as long as it can store a container.

In order to improve the storage capacity of the multifunctional area, continuing to refer to FIG. 1, in this embodiment, the multifunctional area includes a plurality of storage positions. One part of the storage positions is arranged at intervals in sequence in a height direction, and the other part of the storage positions is arranged at intervals in sequence in the same horizontal plane. That is, in this embodiment, the plurality of storage positions are arranged at intervals in both the height direction and the horizontal direction.

It can be understood that a specific number of the storage positions depends on a size of a space above the sorting station. The worker in the art can select an appropriate number and arrangement on the basis of an actual situation.

Of course, according to some other embodiments of this application, the plurality of storage positions of this application are only arranged at intervals in the height direction, or are only arranged at intervals in the same horizontal plane.

Referring to FIG. 1 to FIG. 4, in this embodiment, the container loading and unloading device includes a portal frame, and a loading and unloading component that moves relative to the portal frame along X, Y, and Z axes of a spatial coordinate system. A direction of a vertical distance between the sorting station and the goods shelf is denoted as a Y-axis direction; a direction perpendicular to the Y axis in the horizontal plane is denoted as an X-axis direction; and a direction perpendicular to the horizontal plane is denoted as a Z-axis direction. It can also be understood that a plane where the X axis and the Y axis are located is the horizontal plane, while the Z axis is located in a vertical plane. It should be noted that in order to facilitate the understanding of relative positional relationships between the X axis, the Y axis, and the Z axis, please refer to FIG. 2 to FIG. 4.

Detailedly, the portal frame includes a pedestal 40, a left vertical column 41, a right vertical column 42, and a cross beam 43. The pedestal 40 is fixed in a working surface of the workstation area and the goods shelf parking area. The left vertical column 41 and the right vertical column 42 are parallel to each other. The cross beam 43 and the pedestal 40 are parallel to each other and are fixedly connected by the left vertical column 41 and the right vertical column 42. That is, the four members are connected in sequence to form a square portal frame structure.

The container loading and unloading device includes a movable vertical column 44. The movable vertical column 44 is located between the left vertical column 41 and the right vertical column 42 and can move in extending directions of the pedestal 40 and the cross beam 43 relative to the pedestal 40 and the cross beam 43, that is, in the X-axis direction. The loading and unloading component 45 is arranged on the movable vertical column 44, and is controlled by a Z-axis driving mechanism to move in the extending direction of the movable vertical column 44, to adjust a displacement of the loading and unloading component 45 relative to the goods shelf in the Z-axis direction.

In addition, the loading and unloading component 45 includes a base 450 and a loading and unloading member 451 controlled by a Y-axis driving mechanism to move in the Y-axis direction relative to the base 450. The base 450 is arranged on the movable vertical column 44 and moves in the Z-axis direction relative to the movable vertical column 44.

In some embodiments, the Y-axis driving mechanism can be a cylinder. A cylinder body of the cylinder is fixedly arranged on the base 450. The loading and unloading member 451 is arranged on a piston rod of the cylinder. A flowing direction of air in the cylinder body of the cylinder is controlled to drive the piston rod to drive the loading and unloading member 451 to move in the Y-axis direction in a reciprocating manner relative to the cylinder body.

When the warehousing system receives a sorting order, the container loading and unloading device determines, according to the database records of the warehousing system, a specific position of a container (a spatial coordinate position of the container) on a goods shelf 20. The container accommodates goods included in the order. The loading and unloading component 45 is controlled to move relative to the portal frame along the X axis and the Y axis until it is basically maintained aligned with a target container, and then the loading and unloading member 451 on the loading and unloading component 45 is controlled to move relative to the base 450 of the loading and unloading component along the Y axis until it grabs the target container.

Detailedly, in this embodiment, the loading and unloading member 451 is a suction cup, which is communicated to a vacuum generating device. When the vacuum generating device is activated, the suction cup will generate a suction force to suck the container, and then return to the base.

When the loading and unloading component of this structure is used, there is no need to reserve a space for commonly used fork arms to extend between two adjacent containers on the goods shelf 20. Containers can be tightly arranged on the goods shelf 20, making full use of the space on the goods shelf 20 to place the containers.

According to some other embodiments of this application, the loading and unloading component of this application includes a push-pull loading and unloading component, a claw loading and unloading component, a fork type loading and unloading component, a mechanical arm, and the like.

According to some other embodiments of this application, the X-axis driving mechanism of the container loading and unloading device of this application can include an X-axis driving motor and an X-axis ball screw nut drive mechanism. A ball screw of the X-axis ball screw nut drive mechanism is connected to the pedestal 40 or the cross beam 43 in a rotatable manner, and a nut block in threaded connection to the ball screw is fixedly connected to the movable vertical column 44. The X-axis driving motor is used for driving the ball screw to rotate relative to the pedestal 40 or cross beam 43. The nut block can drive the movable vertical column 44 to move along the X axis to adjust the movement of the loading and unloading component 45 in the X-axis direction relative to the portal frame.

According to some other embodiments of this application, the X-axis driving mechanism of the container loading and unloading device of this application may include an X-axis driving motor and an X-axis gear-rack drive mechanism. A gear of the X-axis gear-rack drive mechanism is connected to the movable vertical column 44 in a rotatable manner, and a rack meshing with the gear is fixedly connected to the pedestal 40 or cross beam 43 and extends in the X-axis direction. The X-axis driving motor is used for driving the gear to rotate relative to the movable vertical column 44. The gear can drive the movable vertical column 44 to move in an extending direction of the rack to adjust the movement of the loading and unloading component 45 in the X-axis direction relative to the portal frame.

Further, in this embodiment, the container loading and unloading device of this application further includes an X-axis guide mechanism. The X-axis guide mechanism is configured to guide the movable vertical column 44 to move in the X-axis direction relative to the portal frame to ensure the stability of movement of the container loading and unloading device.

Detailedly, the X-axis guide mechanism includes an X-axis linear guide rail. The X-axis linear guide rail includes a linear rail extending along the X axis and arranged on the pedestal 40 or cross beam 43 of the portal frame, and a sliding block slidably connected to the linear rail. The movable vertical column 44 is arranged on the sliding block, and the movable vertical column 44 slides along the linear rail in the X-axis direction with the sliding block.

According to some other embodiments of this application, the Z-axis driving mechanism of the container loading and unloading device of this application may include a Z-axis driving motor and a Z-axis ball screw nut drive mechanism. A ball screw of the Z-axis ball screw nut drive mechanism is connected to the movable vertical column 44 in a rotatable manner, and a nut block in threaded connection to the ball screw is fixedly connected to the base 450 of the loading and unloading component 45. The Z-axis driving motor is used for driving the Z-axis ball screw to rotate relative to the movable vertical column 44. The nut block can drive the loading and unloading component 45 to move along the Z axis to adjust the movement of the loading and unloading component 45 in the Z-axis direction relative to the portal frame.

According to some other embodiments of this application, the Z-axis driving mechanism of the container loading and unloading device of this application may include a Z-axis driving motor and a Z-axis gear-rack drive mechanism. A gear of the Z-axis gear-rack drive mechanism is connected to the base 450 of the loading and unloading component 45 in a rotatable manner, and a rack meshing with the gear is fixedly connected to the movable vertical column 44 and extends in the Z-axis direction. The Z-axis driving motor is used for driving the gear to rotate relative to the movable vertical column 44. The gear can drive the loading and unloading component 45 to move in an extending direction of the rack to adjust the movement of the loading and unloading component 45 in the Z-axis direction relative to the portal frame.

Similarly, in this embodiment, the container loading and unloading device further includes a Z-axis guide mechanism. The Z-axis guide mechanism is configured to guide the loading and unloading component 45 to move in the Z-axis direction relative to the movable vertical column 44 to ensure the stability of movement of the container loading and unloading device.

Detailedly, the Z-axis guide mechanism includes a Z-axis linear guide rail. the Z-axis linear guide rail includes a linear rail extending along the Z axis and arranged on the movable vertical column 44, and a sliding block slidably connected to the linear rail. The base 450 of the loading and unloading component 45 is arranged on the sliding block, and the base 450 of the loading and unloading component 45 slides along the linear rail in the Z-axis direction with the sliding block.

Further, in this embodiment, the warehousing system further includes an automatic handling device. The automatic handling device is configured to transport a goods shelf to the goods shelf parking area. There is a container stored on the goods shelf, and goods are accommodated in the container.

It should be noted that the automatic handling device of this application includes a backpack type, jack-up type, traction type, and fork type automatic handling device.

According to one embodiment of this application, the container loading and unloading device of this application includes a portal frame and a loading and unloading component that moves along the X axis and the Y axis of a spatial coordinate system relative to the portal frame.

The loading and unloading component moves in the X-axis direction to select a target container, and then moves in the Y-axis direction to grab the target container.

It should be noted that the movement mechanism of the loading and unloading component in the X-axis direction and the Y-axis direction relative to the portal frame can refer to the embodiment of the forgoing three-axis movement.

According to one embodiment of this application, the container loading and unloading device of this application includes a portal frame and a loading and unloading component that moves along the Z axis and the Y axis of a spatial coordinate system relative to the portal frame.

The loading and unloading component moves in the Z-axis direction to select a target container, and then moves in the Y-axis direction to grab the target container.

It should be noted that the movement mechanism of the loading and unloading component in the Z-axis direction and the Y-axis direction relative to the portal frame can refer to the embodiment of the forgoing three-axis movement.

According to some embodiments of this application, the storage position of the multifunctional area of this application is configured to store a container; and a demand frequency of goods in the container within a preset time period exceeds a demand frequency threshold.

The demand frequency within preset time refers to a number of sorting orders containing the goods within a preset time period. That is, if two sorting orders contain the goods within the preset time period, it indicates that the demand frequency of the goods is twice within the preset time period.

The demand frequency threshold refers to a preset standard value used for determining the demand frequency of the goods. The standard value can be a specific value or a range of values. The demand frequency threshold depends on factors such as a weight and the place of origin of the goods.

The preset time period can be a specific preset value or a preset range of values such as several hours of a single day, a single day, a week, a month, a quarter, or a year. The warehousing system is set according to an actual application scenario, or is set by a worker on the basis of an actual sorting workload.

In order to facilitate a better understanding, the working principle of the above warehousing system will be explained in detail in the following two application scenarios.

### Application scenario I

The storage position of the multifunctional area is configured to store a container that is used for accommodating goods with a demand frequency greater than a demand frequency threshold within a preset time period.

When the demand frequency of the goods within the preset time period is equal to or at the demand frequency threshold, it indicates that the demand frequency of the goods is at a normal level. When the demand frequency of the goods within the preset time period exceeds the demand frequency threshold, it indicates that the goods are popular or best-selling products. On the contrary, when an actual demand frequency of the goods within the preset time period is less than the demand frequency threshold, it indicates that the goods are slow-selling products.

When the warehousing system detects, according to the demand frequency within the preset time period, that the goods stored in the container are the popular or best-selling products, namely, that the actual demand frequency of the goods within the preset time period is greater than the demand frequency threshold, the container loading and unloading device of the warehousing system grabs the container from the goods shelf in the goods shelf parking area and transfers the container to the multifunctional area for temporary storage.

When receiving an instruction (order) of sorting the goods inside the container, the container loading and unloading device transfers the container from the multifunctional area to the sorting station in the workstation area for the worker or sorting robot to perform sorting.

After sorting is completed, if there are still goods left in the container, the container loading and unloading device will transfer the container back to the multifunctional area for temporary storage. Otherwise, the container loading and unloading device directly puts the container back to a free-container storage area.

Detailedly, a sorting system can identify materials that are currently not desired but will be selected after a period of time. After the multifunctional area is set up, the system can pull more materials than those desired by an existing planting wall, that is, there are materials in a goods shelf that are desired in the existing planting wall. At the same time, if there is still a material that will be used after a period of time, the container loading and unloading device can remove the pre-selected material from the goods shelf and temporarily place it in the multifunctional area. When the material is desired, the container loading and unloading device is directly used to take the material or a container with the material from the multifunctional area and send it to a sorting position for sorting, which can accelerate order completion and effectively reduce the number of times of moving the goods shelf by the automatic handling device.

In addition, it should be noted that popular products can be stored directly in the multifunctional area during warehousing, or a popular product can be moved out of the warehousing area upon it is found, and is directly placed in the multifunctional area after sorting is completed.

### Application scenario II

The multifunctional area is configured to store a container. The second container is used for accommodating goods with a demand frequency on the next day greater than a daily demand frequency threshold.

It should be noted that the daily demand frequency threshold refers to a specific value or a range of values of a demand frequency of goods within a preset single day. The daily demand frequency threshold depends on factors such as the type of goods and the season. For example, the daily demand frequency of ice creams in summer is greater than that in winter.

When the warehousing system predicts, according to a reservation order or an actual daily demand frequency of the goods on that day, that an actual daily demand frequency of the goods on the next day will be greater than the daily demand frequency threshold, the warehousing system calls the automatic handling device to move the goods shelf with the container that accommodates the goods to the goods shelf parking area, and the container loading and unloading device transfers the container from the goods shelf to the multifunctional area for temporary storage.

When the warehousing system receives an instruction of sorting the goods within the container on the next day, the container loading and unloading device transfers the container from the multifunctional area to the sorting station for the worker or sorting robot to perform sorting. After sorting is completed, the container loading and unloading device puts the container with remaining goods back to the multifunctional area, or directly puts the empty container back to a free-container storage area.

According to some embodiments of this application, the storage position of the multifunctional area is configured to store a container which stores an item associated with designated goods.

The item associated with the designated goods can be a gift of the designated goods. A gift refers to an item that is free of charge when a customer purchases the designated goods. Of course, the item associated with the designated goods can also be a commodity with a discounted price when it is placed on the same order as the designated goods.

The warehousing system calls the automatic handling device to move a goods shelf that stores a gift to the goods shelf parking area, and the container loading and unloading device transfers a container with the gift from the goods shelf in the goods shelf parking area to the multifunctional area for temporary storage. When the warehousing system receives an instruction of sorting the designated goods associated with the gift, the warehousing system calls automatic handling device to move the goods shelf with the designated goods to the goods shelf parking area. The container loading and unloading device transfers the container with the designated goods from the goods shelf in the goods shelf parking area to the sorting station in the workstation area. Then, or before this step, the container loading and unloading device transfers the container with the gift from the multifunctional area to the sorting station for the worker or the sorting robot to perform sorting.

After sorting is completed, if there are still designated goods left in the container, the container loading and unloading device puts the container with the designated goods back onto the goods shelf, or directly puts the empty container to the free-container storage area. If there is still a gift left in the container, the container loading and unloading device puts the container back to the multifunctional area or puts the empty container back to the free-container storage area.

In addition, it should be noted that gifts can be stored directly in the multifunctional area during warehousing, or a popular product can be moved out of the warehousing area upon it is found, and is directly placed in the multifunctional area after sorting is completed.

According to one embodiment of this application, the storage position of the multifunctional area of this application is configured to store a container; sorting of goods in the container has been completed; and the container loading and unloading device is not free to transfer the container.

Detailedly, when the worker or sorting robot completes the sorting according to a sorting order, but the container loading and unloading device is working and is not fee to transfer the sorting-completed container, the worker or sorting robot moves the container to the multifunctional area for temporary storage. After the container loading and unloading device is free, the container loading and unloading device transfers the container onto a goods shelf, to avoid stacking of the sorting-completed container on the sorting station, which may affect the subsequent sorting of the sorting order, and to maintain orderly and smooth sorting.

According to one embodiment of this application, the storage position of the multifunctional area of this application is configured to store a container; sorting of goods in the container has been completed; and a goods shelf for storing the container has not yet reached the goods shelf parking area.

Detailedly, for ease of management, each container in the warehousing system will be stored on a designated goods shelf. After the worker or sorting robot completes the sorting process according to one order, a container usually needs to be put back onto a designated goods shelf.

However, in actual sorting work, due to the occupation of the automatic handling device and other reasons, a goods shelf with a sorting-completed container has not yet reached the goods shelf parking area, resulting in the problem of stacking of containers at the sorting station.

Based on this, in the warehousing system of this application, when the goods shelf with the sorting-completed container has not yet reached the goods shelf parking area, the worker, the sorting robot, or the container loading device places the container in the multifunctional area for temporary storage. After the goods shelf with the container is in place, the container loading device then transfers the container onto the goods shelf, thereby avoiding the stacking of the sorting-completed container at the sorting station, which may affect sorting of subsequent sorting orders, and to main orderly and smooth sorting.

According to one embodiment of this application, the storage position of the multifunctional area of this application is configured to store a container; sorting of goods in the container has been completed; and the goods are selected in an order to be sorted.

In order to reasonably arrange the workload of each of the sorting stations in the warehousing system, the warehousing system may regularly assign a sorting order to each of the sorting station. That is, each of the sorting stations is assigned with a plurality of sorting orders which are queued up for sorting in a chronological order of assignment. Goods in a current sorting order on the sorting station can also appear in the subsequent queued sorting orders. Since the container stores goods appearing in a plurality of sorting orders, the warehousing system needs to call the automatic handling device for multiple times.

Therefore, in the warehousing system of this application, after sorting is completed, it is then confirmed whether the sorted goods have been selected in the subsequent queued orders to be sorted. If the goods are selected, the worker, the sorting robot, or the container loading device places the container in the multifunctional area for temporary storage. After a subsequent sorting order with the selected goods is received, the container is directly moved from the multifunctional area. There is no need to call the automatic handling device for multiple times to move the goods shelf with the container, which can reduce the number of calls to the automatic handling device and improve sorting efficiency.

According to one embodiment of this application, the container loading and unloading device of this application is configured to perform a tallying operation.

In order to facilitate a better understanding, the tallying principle of the above container loading and unloading device will be explained in detail in the following two application scenarios.

### Application scenario I

When the container loading and unloading device is free, the warehousing system calls the automatic handling device to move a goods shelf to the goods shelf parking area. According to the types of goods stored on the goods shelf and demand frequency of the various types of goods in previous orders within a preset time period, the warehousing system deploys positions of different containers on the goods shelf, for example, moving containers with goods with a higher demand frequency to an outer side of containers with goods with a lower frequency, so as to shorten the sorting time and improve the sorting efficiency.

Within the preset time period, when a demand frequency of goods in a first container is greater than a demand frequency of goods in a second container, and a position of the second container on a goods shelf is more convenient for fetching and placing than the first container, the container loading and unloading device is configured to move the second container from the goods shelf to the multifunctional area for temporary storage, transfers the first container from a current position to an original position of the second container, and transfers the second container from the multifunctional area to an original position of the first container.

Detailedly, the warehousing system determines a demand frequency of goods on a goods shelf within a preset time period on the basis of previous orders. If a container with goods with a higher demand frequency is located on an inner side of a container with goods with a lower demand frequency, the container loading and unloading device first transfers the container with the goods with the lower demand frequency from the goods shelf to the multifunctional area for temporary storage, then transfers the container with the goods with the higher demand frequency from the goods shelf to the multifunctional area for temporary storage, then puts the container with the goods with the lower demand frequency back onto the goods shelf from the multifunctional area, and finally puts the container with the goods with the higher demand frequency from the multifunctional area back onto the goods shelf and locate it on the outer side of the container with the goods with the lower demand frequency for ease of grabbing.

Or, the container loading and unloading device deploys the container with the goods with the higher demand frequency on the goods shelf to a lower place on the goods shelf, and deploys the container with the goods with the lower demand frequency to a higher place on the goods shelf.

Detailedly, the warehousing system calls the automatic handling device to move a goods shelf to the goods shelf parking area, and predicts demand frequency levels of the various types of goods on the goods shelf on the basis of the previous orders. Based on this, the container loading and unloading device first transfers a container with goods with a lower demand frequency on a lower place of the goods to the multifunctional area for temporary storage, then rotates a container with goods with a higher demand frequency on a higher place of the goods to the lower place on the goods shelf, and then puts the container with the goods with the lower demand frequency temporarily stored in the multifunctional area back to the higher place of the goods. The operations are repeated until all goods with higher demand frequency on the goods shelf are located below the container with the goods with the lower demand frequency for ease of fetching and placing.

### Application scenario II

When a demand frequency of goods in a container exceeds a demand frequency threshold within a preset time period, the container loading and unloading device is configured to transfer the container from a current goods shelf to a new goods shelf. The new goods shelf is configured to specially store the container in which the demand frequency of the goods within the preset time period exceeds the demand frequency threshold.

When the demand frequency of the goods within the preset time period is equal to or at the demand frequency threshold, it indicates that the demand frequency of the goods is at a normal level. When the demand frequency of the goods within the preset time period exceeds the demand frequency threshold, it indicates that the goods are popular or best-selling products. On the contrary, when an actual demand frequency of the goods within the preset time period is less than the demand frequency threshold, it indicates that the goods are slow-selling products.

When the warehousing system detects, according to the demand frequency within the preset time period, that the goods stored in the container are the popular or best-selling products, namely, that the actual demand frequency of the goods within the preset time period is greater than the demand frequency threshold, the container loading and unloading device of the warehousing system grabs the container from the current goods shelf and transfers the container to a new goods shelf.

In this application, containers with goods with higher demand frequency within the preset time period are all intensively stored on the new goods shelf, and the goods shelf will be parked at goods shelf parking place. When any of the above goods is required to be sorted in the sorting order, the container is directly transferred from the goods shelf to the sorting station, without calling the automatic handling device to repeatedly move the goods shelves corresponding to the respective goods, which reduces the number of times of moving by the automatic handling device and improves the sorting efficiency.

After sorting is completed, if there are still goods left in the first container, the container loading and unloading device will transfer the first container back to the multifunctional area for temporary storage. Otherwise, the container loading and unloading device directly puts the first container back to a free-container storage area.

According to one embodiment of this application, the container loading and unloading device of this application is configured to put an empty container back to the multifunctional area.

The empty container is transferred by the container loading and unloading device from the container storage area to the multifunctional area. Or, the warehousing system calls the automatic handling device to transfer a goods shelf with an empty container to the goods shelf parking area, and then the container loading and unloading device transfers the empty container from the goods shelf to the multifunctional area for temporary storage.

When the warehousing system receives an instruction of shelving of a full container load or an alarm of a functionality shortage of external containers, the container loading and unloading device transfers an empty container from the multifunctional area to the sorting station, so that the worker or sorting robot sorts goods into the empty container.

It should be noted that the shelving of a full container load refers to fully filling a container with goods for overall storage.

According to one embodiment of this application, the container loading and unloading device of this application is configured to puts an empty container back to a goods shelf used for storing empty containers.

After the worker or sorting robot completes sorting, if the sorted container is empty, the container loading and unloading device puts the empty container back onto the goods shelf used for storing empty containers, and the goods shelf can be parked in the goods shelf parking area.

When the warehousing system receives an instruction of shelving of a full container load or an alarm of a functionality shortage of external containers, the container loading and unloading device transfers an empty container from the goods shelf used for storing empty containers to the sorting station, so that the worker or sorting robot sorts goods into the empty container.

The present disclosure further provides a control method of a warehousing system. The warehousing system is the foregoing warehousing system. The control method of the warehousing system includes the following main steps:
The container loading and unloading device transfers a container satisfying a preset attribute among the workstation area, the goods shelf parking area, and the multifunctional area on the basis of the preset attribute.

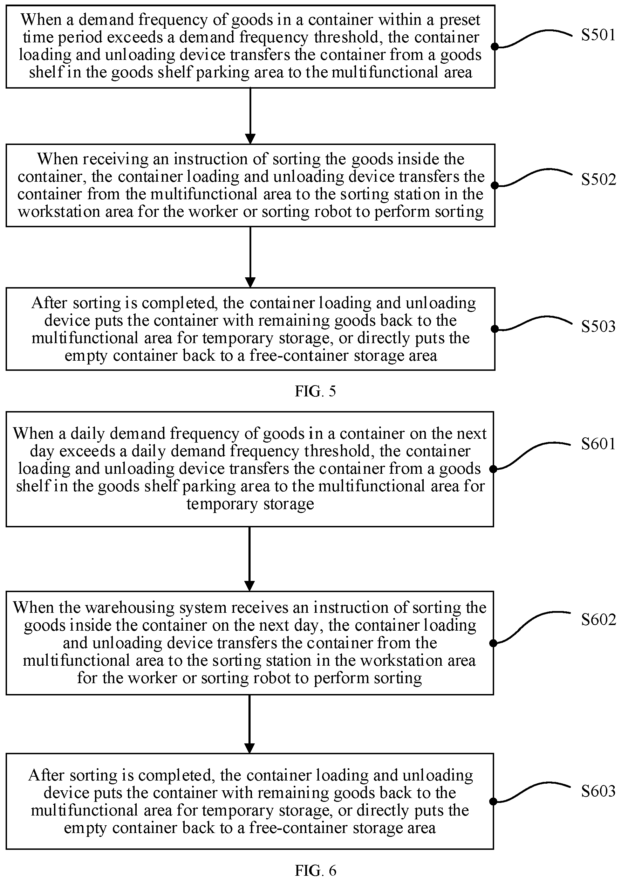

For ease of a better understanding, a specific control logic of the control method of the present disclosure will be described in detail using four embodiments below in conjunction with FIG. 5 to FIG. 7.

### Embodiment I of the control method

Referring to FIG. 5, in this embodiment, the control method of the warehousing system includes the following steps.

S501. When a demand frequency of goods in a container within a preset time period exceeds a demand frequency threshold, the container loading and unloading device transfers the container from a goods shelf in the goods shelf parking area to the multifunctional area.

The demand frequency within preset time refers to a number of sorting orders containing the goods within a preset time period. That is, if two sorting orders contain the goods within the preset time period, it indicates that the demand frequency of the goods is twice within the preset time period.

The preset time period can be a specific preset value or a preset range of values such as several hours of a single day, a single day, a week, a month, a quarter, or a year. The warehousing system is set according to an actual application scenario, or is set by a worker on the basis of an actual sorting workload.

When an instruction of sorting the goods is received, the container loading and unloading device transfers the container from the multifunctional area to the sorting station.

When the demand frequency of the goods within the preset time period is equal to or at the demand frequency threshold, it indicates that the demand frequency of the goods is at a normal level. When the demand frequency of the goods within the preset time period exceeds the demand frequency threshold, it indicates that the goods are popular or best-selling products. On the contrary, when an actual demand frequency of the goods within the preset time period is less than the demand frequency threshold, it indicates that the goods are slow-selling products.

When the warehousing system detects, according to the demand frequency within the preset time period, that the goods stored in the container are the popular or best-selling products, namely, that the actual demand frequency of the goods within the preset time period is greater than the demand frequency threshold, the container loading and unloading device of the warehousing system grabs the container from the goods shelf in the goods shelf parking area and transfers the container to the multifunctional area for temporary storage.

S502. When an instruction of sorting the goods inside the container is received, the container loading and unloading device transfers the container from the multifunctional area to the sorting station in the workstation area for the worker or sorting robot to perform sorting.

Of course, in some other embodiments, the sorting personnel can also directly transfer the container from the multifunctional area to the sorting station in the workstation area, without using the container loading and unloading device.

S503. After sorting is completed, the container loading and unloading device puts the container with remaining goods back to the multifunctional area for temporary storage, or directly puts the empty container back to a free-container storage area.

Detailedly, a sorting system can identify materials that are currently not desired but will be selected after a period of time. After the multifunctional area is set up, the system can pull more materials than those desired by an existing planting wall, that is, there are materials in a goods shelf that are desired in the existing planting wall. At the same time, if there is still a material that will be used after a period of time, the container loading and unloading device can remove the pre-selected material from the goods shelf and temporarily place it in the multifunctional area. When the material is desired, the container loading and unloading device is directly used to take the material or a container with the material from the multifunctional area and send it to a sorting position for sorting, which can accelerate order completion and effectively reduce the number of times of moving the goods shelf by the automatic handling device.

In addition, it should be noted that popular products can be stored directly in the multifunctional area during warehousing, or a popular product can be moved out of the warehousing area upon it is found, and is directly placed in the multifunctional area after sorting is completed.

### Embodiment II of the control method

Referring to FIG. 6, in this embodiment, the control method of the warehousing system includes the following steps.

S601. When a daily demand frequency of goods in a container on the next day exceeds a daily demand frequency threshold, the container loading and unloading device transfers the container from a goods shelf in the goods shelf parking area to the multifunctional area for temporary storage.

It should be noted that the daily demand frequency threshold refers to a specific value or a range of values of a demand frequency of goods within a preset single day. The daily demand frequency threshold depends on factors such as the type of goods and the season. For example, the daily demand frequency of ice creams in summer is greater than that in winter.

Detailedly, in one embodiment, after receiving a next-day reservation order, the warehousing system compares a daily demand frequency of target goods on the next-day reservation order with the daily demand frequency threshold, and places the target goods in a container. When the daily demand frequency of the target goods on the next-day reservation order exceeds the daily demand frequency threshold, the warehousing system calls the automatic handling device to move a goods shelf that stores the container to the goods shelf parking area. The container loading and unloading device transfers the container from the goods shelf in the goods shelf parking area to the multifunctional area for temporary storage.

In another embodiment, when the warehousing system predicts, according to an actual demand frequency of the target goods on that day, that the daily demand frequency of target goods on the next day will exceed the daily demand frequency threshold of the target goods, the target goods are placed in a container, and the warehousing system calls the automatic handling device to move a goods shelf that stores the container to the goods shelf parking area, and the container loading and unloading device transfers the container from the goods shelf in the goods shelf parking area to the multifunctional area for temporary storage.

For example, for goods, such as fruits and vegetables, with demand frequency affected by the season, when the warehousing system obtains that the daily demand frequency of Xantolis stenosepala [Hu] V. Royen on October 10^{th} in late autumn far exceeds a preset daily demand frequency threshold for the goods. Based on this, the warehousing system predicts that a daily demand frequency of the Xantolis stenosepala [Hu] V. Royen on the next day will also exceed its daily demand frequency threshold. The warehousing system calls the automatic handling device to move a goods shelf stored to the goods shelf parking area. The container loading and unloading device transfers the container from the goods shelf in the goods shelf parking area to the multifunctional area for temporary storage, and the container has stored the target goods, namely, the Xantolis stenosepala [Hu] V. Royen.

S602. When the warehousing system receives an instruction of sorting the goods inside the container on the next day, the container loading and unloading device transfers the container from the multifunctional area to the sorting station in the workstation area for the worker or sorting robot to perform sorting.

S503. After sorting is completed, the container loading and unloading device puts the container with remaining goods back to the multifunctional area for temporary storage, or directly puts the empty container back to a free-container storage area.

### Embodiment III of the control method

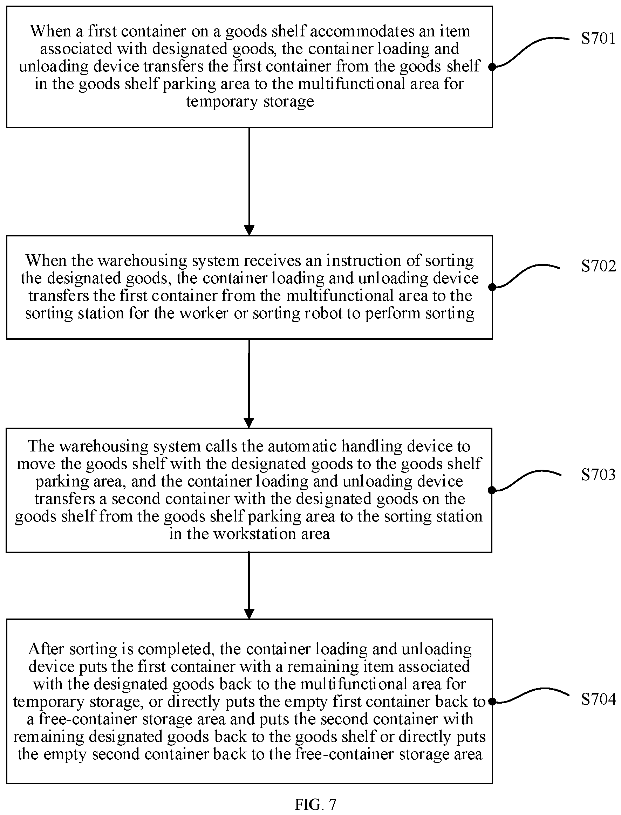

Referring to FIG. 7, in this embodiment, the control method of the warehousing system includes the following steps.

S701. When a first container on a goods shelf accommodates an item associated with designated goods, the container loading and unloading device transfers the first container from the goods shelf in the goods shelf parking area to the multifunctional area for temporary storage.

The item associated with the designated goods can be a gift of the designated goods. A gift refers to an item that is free of charge when a customer purchases the designated goods. Of course, the item associated with the designated goods can also be a commodity with a discounted price when it is placed on the same order as the designated goods.

Before step S701, the control method further includes: the automatic handling device is called to move the goods shelf that stores the first container to the goods shelf parking area.

S702. When the warehousing system receives an instruction of sorting the designated goods, the container loading and unloading device transfers the first container from the multifunctional area to the sorting station for the worker or sorting robot to perform sorting.

Before or after step S702, the control method further includes step S703. The warehousing system calls the automatic handling device to move the goods shelf with the designated goods to the goods shelf parking area, and the container loading and unloading device transfers a second container with the designated goods on the goods shelf from the goods shelf parking area to the sorting station in the workstation area.

S704. After sorting is completed, the container loading and unloading device puts the first container with a remaining item associated with the designated goods back to the multifunctional area for temporary storage, or directly puts the empty first container back to a free-container storage area and puts the second container with remaining designated goods back to the goods shelf or directly puts the empty second container back to the free-container storage area.

In addition, it should be noted that the item associated with the designated goods can be directly stored in the multifunctional area during warehousing, or a popular product can be moved out of a warehousing area upon it is found, and is directly placed in the multifunctional area after sorting is completed.

### Embodiment IV of the control method

In this embodiment, the control method of the warehousing system includes the following steps.

When the container loading and unloading device is free, the container loading and unloading device performs a tallying operation.

When the container loading and unloading device is free, the warehousing system calls the automatic handling device to move a goods shelf to the goods shelf parking area. According to the types of goods stored on the goods shelf and demand frequency of the various types of goods in previous orders, the warehousing system deploys positions of different containers on the goods shelf, for example, moving containers with goods with a higher demand frequency to an outer side of containers with goods with a lower demand frequency, so as to shorten the sorting time and improve the sorting efficiency.

Detailedly, the warehousing system determines a demand frequency of goods on a goods shelf on the basis of previous orders. If a container with goods with a high demand frequency is located on an inner side of a container with goods with a low demand frequency, the container loading and unloading device first transfers the container with the goods with the low demand frequency from the goods shelf to the multifunctional area for temporary storage, then transfers the container with the goods with the high demand frequency from the goods shelf to the multifunctional area for temporary storage, then puts the container with the goods with the low demand frequency back onto the goods shelf from the multifunctional area, and finally puts the container with the goods with the high demand frequency from the multifunctional area back onto the goods shelf and locate it on the outer side of the container with the goods with the low demand frequency for ease of grabbing.

Or, the container loading and unloading device deploys the container with the goods with the high demand frequency on the goods shelf to a lower place on the goods shelf, and deploys the container with the goods with the low demand frequency to a higher place on the goods shelf.

Detailedly, the warehousing system calls the automatic handling device to move a goods shelf to the goods shelf parking area, and predicts demand frequency levels of the various types of goods on the goods shelf on the basis of the previous orders. Based on this, the container loading and unloading device first transfers a container with goods with a low demand frequency on a lower place of the goods shelf to the multifunctional area for temporary storage, then rotates a container with goods with a high demand frequency on a higher place of the goods to the foregoing lower place, and then puts the container temporarily stored in the multifunctional area back to the higher place of the goods. The operations are repeated until all goods with high demand frequency on the goods shelf are located below the goods with the low demand frequency for ease of fetching and placing.

### Embodiment V of the control method

In this embodiment, the control method of the warehousing system includes the following steps.

An empty container is stored in the multifunctional area.

It should be noted that the empty container can be stored on a goods shelf in advance. The warehousing system calls the automatic handling device to move the goods shelf to the goods shelf parking area, and the container loading and unloading device transfers the empty container from the goods shelf to the multifunctional area for temporary storage.

When the warehousing system receives an instruction of shelving of a full container load or an alarm of a shortage of externally supplied containers, the container loading and unloading device transfers an empty container from the multifunctional area to the sorting station, so that the worker or sorting robot sorts goods into the empty container.

It should be noted that the shelving of a full container load refers to fully filling a container with goods for overall sale.

### Embodiment VI of the control method

In this embodiment, the control method of the warehousing system includes the following steps.

After sorting of goods in a container is completed, it is determined whether the goods are selected in an order to be sorted;
if the goods are selected in the order to be sorted, the container loading and unloading device transfers the container from the sorting station to the multifunctional area for temporary storage; and
after receiving an instruction of sorting the order to be sorted in which the goods are selected, the container loading and unloading device transfers the container from the multifunctional area to the sorting station.

It should be noted that a demand frequency of the corresponding goods to be sorted in the above container has not reached a demand frequency threshold. However, due to a subsequent order sorting requirement, to avoid back and forth transportation, the container is directly stored in the multifunctional area to improve the overall working efficiency. It can be understood that if the demand frequency of goods that have been sorted does not exceed the demand frequency threshold, the container loading and unloading device directly transfers the container with the goods from the sorting station to the original position of the original goods shelf or to another free position. If the storage position of the container on the original goods shelf needs to be adjusted or the goods shelf for storage needs to be changed, the container can be temporarily stored in the multifunctional area according to a need, and is then placed in a corresponding new storage position through the container loading and unloading device. Or, the container is directly placed at a new storage position through the container loading and unloading device.

### Embodiment II of the warehousing system

In another embodiment of the present disclosure, the warehousing system of the present disclosure includes a workstation area, a goods shelf parking area, a multifunctional area, and a container loading and unloading device. The workstation area includes a sorting station. The goods shelf parking area is configured to park a goods shelf. The multifunctional area is located above the sorting station, and is configured to store a container transferred from the sorting station or the goods shelf. The container loading and unloading device is configured to transfer the container among the workstation area, the goods shelf parking area, and the multifunctional area.

It should be noted that the goods shelf in the warehousing system of the present disclosure does not merely include a traditional goods shelf, but also includes a pallet, a material storage shelf, or other forms of devices capable of storing goods. The device can be moved between different areas of a warehouse through an automatic handling device or other mobile devices. Correspondingly, the automatic handling device used for moving a goods shelf in the present disclosure is not an automatic handling device used for moving a traditional goods shelf, but a robot capable of moving goods-carrying devices such as a goods shelf, a pallet, or a material storage shelf.

According to the warehousing system, a container satisfying a preset condition can be temporarily stored in the multifunctional area in advance on the basis of information such as a shipment quantity of target goods on an order; when receiving a sorting order related to the preset condition, there is no need to call the automatic handling device to move a goods shelf with the corresponding container, and the container loading and unloading device only needs to transfer the corresponding container to the sorting station from the multifunctional area; and after sorting is completed, the container loading and unloading device puts the container back to the multifunctional area, so that the workload of the automatic handling device can be reduced. Furthermore, the multifunctional area is located above the sorting station, and the container loading and unloading device can quickly transfer a container, which can greatly improve the sorting efficiency.

In order to facilitate a better understanding, a specific structure and working principle of the warehousing system will be explained in detail using one specific embodiment below in conjunction with FIG. 1 to FIG. 4. It should be noted that for clarity, ordinal words such as "first" and "second" used in the following text are distinguish containers. It can be understood that these ordinal words do not limit the protection scope of the present disclosure.

Referring to FIG. 1, in this embodiment, the warehousing system includes a workstation area, a goods shelf parking area, a multifunctional area, and a container loading and unloading device. For convenience of better understanding the specific structure of the warehousing system, please refer to FIG. 2 to FIG. 4.

The workstation area includes a sorting station. The sorting station is configured to place a container, so that a worker or a sorting robot sorts out goods meeting an order requirement from the container, and puts the goods onto an automatic handling device or a conveying belt.

Each of the sorting stations includes a first supporting frame and a first guide mechanism arranged on the first supporting frame; and the first guide mechanism is configured to assist the container loading and unloading device in fetching and placing a container.

Detailedly, the first supporting frame includes a first stand 10, a first left vertical plate 11, a first right vertical plate 12, and a first middle vertical plate 13. The first left vertical plate 11, the first right vertical plate 12, and the first middle vertical plate 13 are parallel to each other and are arranged on the first stand 10 at an interval.

The first guide mechanism includes a plurality of first rollers 14. One part of the first rollers 14 is arranged in parallel and at intervals on the first left vertical plate 11 and the first middle vertical plate 13 in a rotatable manner, and the other part of the first rollers 14 is arranged in parallel and at intervals between the first right vertical plate 12 and the first middle vertical plate 13 in a rotatable manner. The first stand 10 has a function of supporting the first left vertical plate 11, the first right vertical plate 12, and the first middle vertical plate 13 to a certain height from the ground, so that the worker or the sorting robot can sort goods.

After the container loading and unloading device places a container at the sorting station, when the worker or the sorting robot thinks that a current position of the container is not convenient for performing a sorting operation, the worker or the sorting robot can easily push the container from the current position to a position convenient for operation with the help of the rolling characteristic of the first guide mechanism.

The goods shelf parking area is arranged at a position closer to the sorting station, and at least two goods shelves 20 can be placed in the goods shelf parking area, so that the warehousing system can quickly sort more kinds or a larger amount of goods within unit time.

The multifunctional area includes a plurality of storage positions, and each of the storage positions includes a second supporting frame and a second guide mechanism arranged on the second supporting frame; and the second guide mechanism is configured to assist the container loading and unloading device in fetching and placing a container.

Detailedly, the second supporting frame includes a second stand 30, a second left vertical plate 31, and a second right vertical plate 32. The second left vertical plate 31 and the second right vertical plate 32 are parallel to each other and are arranged on the second stand 30 at an interval.

The second guide mechanism includes a plurality of second rollers 33. The second rollers 33 are parallel to each other in sequence and are arranged between the second left vertical plate 31 and the second right vertical plate 32 at intervals in a rotatable manner.

The storage position is fixed to a fixing wall of the warehouse through a second stand 30 or to the sorting station through an auxiliary stand, as long as the multifunctional area is located above the sorting station to fully use a free space above the sorting station in the warehouse. Each of the storage positions in this embodiment can be used for storing more than one container transferred by the container loading and unloading device. In addition, it should be noted that the above structural form is only one implementation form of the storage position. The storage position can also be of another structure, as long as it can store a container. Each of the storage position can be configured to only place one goods box.

In order to make multifunctional area store more containers, referring to FIG. 1, in this embodiment, the multifunctional area includes a plurality of storage positions. One part of the storage positions is arranged at intervals in sequence in a height direction, and the other part of the storage positions is arranged at intervals in sequence in the same horizontal plane. It can be understood that a specific number of the storage positions depends on a size of a space above the sorting station. The worker in the art can select an appropriate number and arrangement on the basis of an actual situation.

Of course, in some other embodiments, the plurality of storage positions are only arranged at intervals in the height direction, or are only arranged at intervals in the same horizontal plane.

The container loading and unloading device includes a portal frame, and a loading and unloading component that moves relative to the portal frame along X, Y, and Z axes of a spatial coordinate system. A direction of a vertical distance between the sorting station and the goods shelf is denoted as a Y-axis direction; a direction perpendicular to the Y axis in the horizontal plane is denoted as an X-axis direction; and a direction perpendicular to the horizontal plane is denoted as a Z-axis direction. It can also be understood that a plane where the X axis and the Y axis are located is the horizontal plane, while the Z axis is located in a vertical plane. It should be noted that in order to facilitate the understanding of relative positional relationships between the X axis, the Y axis, and the Z axis, please refer to FIG. 2 to FIG. 4.

Detailedly, the portal frame includes a pedestal 40, a left vertical column 41, a right vertical column 42, and a cross beam 43. The pedestal 40 is fixed in a working surface of the workstation area and the goods shelf parking area. The left vertical column 41 and the right vertical column 42 are parallel to each other. The cross beam 43 and the pedestal 40 are parallel to each other and are fixedly connected by the left vertical column 41 and the right vertical column 42. That is, the four members are connected in sequence to form a square portal frame structure.

The container loading and unloading device includes a movable vertical column 44. The movable vertical column 44 is located between the left vertical column 41 and the right vertical column 42 and can move in extending directions of the pedestal 40 and the cross beam 43 relative to the pedestal 40 and the cross beam 43, that is, in the X-axis direction. The loading and unloading component 45 is arranged on the movable vertical column 44, and is controlled by a Z-axis driving mechanism to move in the extending direction of the movable vertical column 44, to adjust a displacement of the loading and unloading component 45 relative to the goods shelf in the Z-axis direction.

In addition, the loading and unloading component 45 includes a base 450 and a loading and unloading member 451 controlled by a Y-axis driving mechanism to move in the Y-axis direction relative to the base 450. The base 450 is arranged on the movable vertical column 44 and moves in the Z-axis direction relative to the movable vertical column 44.

In some embodiments, the Y-axis driving mechanism can be a cylinder. A cylinder body of the cylinder is fixedly arranged on the base 450. The loading and unloading member 451 is arranged on a piston rod of the cylinder. A flowing direction of air in the cylinder body of the cylinder is controlled to drive the piston rod to drive the loading and unloading member 451 to move in the Y-axis direction in a reciprocating manner relative to the cylinder body.

When the warehousing system receives a sorting order, the container loading and unloading device determines, according to a record of a database of the warehousing system, a specific position (a spatial coordinate position of a container) of a target container with goods in the order on a goods shelf 20, and the loading and unloading component 45 is controlled to move along the X axis and the Y axis relative to the portal frame until it is basically kept aligned with the target container. The loading and unloading member 451 on the loading and unloading component 45 is then controlled to move along the Y axis relative to the base 450 until it grabs the target container.

Detailedly, in this embodiment, the loading and unloading member 451 is a suction cup, which is communicated to a vacuum generating device. When the vacuum generating device is activated, the suction cup will generate a suction force to suck the container, and then return to the base.

When the loading and unloading component of this structure is used, there is no need to reserve a space for commonly used fork arms to extend between two adjacent containers on the goods shelf 20. Containers can be tightly arranged on the goods shelf 20, making full use of the space on the goods shelf 20 to place the containers.

In addition, in some other embodiments, the X-axis driving mechanism of the container loading and unloading device can include an X-axis driving motor and an X-axis ball screw nut drive mechanism. A ball screw of the X-axis ball screw nut drive mechanism is connected to the pedestal 40 or the cross beam 43 in a rotatable manner, and a nut block in threaded connection to the ball screw is fixedly connected to the movable vertical column 44. The X-axis driving motor is used for driving the ball screw to rotate relative to the pedestal 40 or cross beam 43. The nut block can drive the movable vertical column 44 to move along the X axis to adjust the movement of the loading and unloading component 45 in the X-axis direction relative to the portal frame.

In some other embodiments, the X-axis driving mechanism of the container loading and unloading device may include an X-axis driving motor and an X-axis gear-rack drive mechanism. A gear of the X-axis gear-rack drive mechanism is connected to the movable vertical column 44 in a rotatable manner, and a rack meshing with the gear is fixedly connected to the pedestal 40 or cross beam 43 and extends in the X-axis direction. The X-axis driving motor is used for driving the gear to rotate relative to the movable vertical column 44. The gear can drive the movable vertical column 44 to move in an extending direction of the rack to adjust the movement of the loading and unloading component 45 in the X-axis direction relative to the portal frame.

Further, in this embodiment, the container loading and unloading device further includes an X-axis guide mechanism. The X-axis guide mechanism is configured to guide the movable vertical column 44 to move in the X-axis direction relative to the portal frame to ensure the stability of movement of the container loading and unloading device.

Detailedly, the X-axis guide mechanism includes an X-axis linear guide rail. The X-axis linear guide rail includes a linear rail extending along the X axis and arranged on the pedestal 40 or cross beam 43 of the portal frame, and a sliding block slidably connected to the linear rail. The movable vertical column 44 is arranged on the sliding block, and the movable vertical column 44 slides along the linear rail in the X-axis direction with the sliding block.

In some embodiments, the Z-axis driving mechanism of the container loading and unloading device can include a Z-axis driving motor and a Z-axis ball screw nut drive mechanism. A ball screw of the Z-axis ball screw nut drive mechanism is connected to the movable vertical column 44 in a rotatable manner, and a nut block in threaded connection to the ball screw is fixedly connected to the base 450 of the loading and unloading component 45. The Z-axis driving motor is used for driving the Z-axis ball screw to rotate relative to the movable vertical column 44. The nut block can drive the loading and unloading component 45 to move along the Z axis to adjust the movement of the loading and unloading component 45 in the Z-axis direction relative to the portal frame.

In some other embodiments, the Z-axis driving mechanism of the container loading and unloading device may include a Z-axis driving motor and a Z-axis gear-rack drive mechanism. A gear of the Z-axis gear-rack drive mechanism is connected to the base 450 of the loading and unloading component 45 in a rotatable manner, and a rack meshing with the gear is fixedly connected to the movable vertical column 44 and extends in the Z-axis direction. The Z-axis driving motor is used for driving the gear to rotate relative to the movable vertical column 44. The gear can drive the loading and unloading component 45 to move in an extending direction of the rack to adjust the movement of the loading and unloading component 45 in the Z-axis direction relative to the portal frame.

Similarly, in this embodiment, the container loading and unloading device further includes a Z-axis guide mechanism. The Z-axis guide mechanism is configured to guide the loading and unloading component 45 to move in the Z-axis direction relative to the movable vertical column 44 to ensure the stability of movement of the container loading and unloading device.

Detailedly, the Z-axis guide mechanism includes a Z-axis linear guide rail. the Z-axis linear guide rail includes a linear rail extending along the Z axis and arranged on the movable vertical column 44, and a sliding block slidably connected to the linear rail. The base 450 of the loading and unloading component 45 is arranged on the sliding block, and the base 450 of the loading and unloading component 45 slides along the linear rail in the Z-axis direction with the sliding block.

Further, in this embodiment, the warehousing system further includes an automatic handling device. The automatic handling device is configured to transport a goods shelf to the goods shelf parking area. There is a container stored on the goods shelf, and goods are accommodated in the container.

In order to facilitate a better understanding, the working principle of the above warehousing system will be explained in detail in the following several application scenarios.

### Application scenario I

The multifunctional area is configured to store a first container that is used for accommodating goods with a first shipment quantity greater than a first shipment quantity threshold within a preset time period.

The preset time period is longer than a day, namely, the preset time period is one week, one month, one quarter, one year, or the like. The first shipment quantity threshold refers to a specific value or a range of values preset according to an annual shipment quantity, a quarterly shipment quantity, a monthly shipment quantity, a weekly shipment quantity, and the like.

When an actual first shipment quantity of the goods within the preset time period is equal to the first shipment quantity threshold, it indicates that the first shipment quantity of the goods is at a normal level. When the first shipment quantity of the goods within the preset time period exceeds the first shipment quantity threshold, it indicates that the goods are popular or best-selling products. On the contrary, when an actual first shipment quantity of the goods within the preset time period is less than the first shipment quantity threshold, it indicates that the goods are slow-selling products.

When the warehousing system detects, according to the shipment quantity within the preset time period, that the goods stored in the first container are the popular or best-selling products, namely, that the actual first shipment quantity of the goods within the preset time is greater than the first shipment quantity threshold, the container loading and unloading device of the warehousing system grabs the first container from the goods shelf in the goods shelf parking area and transfers the first container to the multifunctional area for temporary storage.

When receiving an instruction (order) of sorting the goods inside the first container, the container loading and unloading device transfers the first container from the multifunctional area to the sorting station in the workstation area for the worker or sorting robot to perform sorting.

After sorting is completed, if there are still goods left in the first container, the container loading and unloading device will transfer the first container back to the multifunctional area for temporary storage. Otherwise, the container loading and unloading device directly puts the first container back to a free-container storage area.

Detailedly, a sorting system can identify materials that are currently not desired but will be selected after a period of time. After the multifunctional area is set up, the system can pull more materials than those desired by an existing planting wall, that is, there are materials in a goods shelf that are desired in the existing planting wall. At the same time, if there is still a material that will be used after a period of time, the container loading and unloading device can remove the pre-selected material from the goods shelf and temporarily place it in the multifunctional area. When the material is desired, the container loading and unloading device is directly used to take the material or a container with the material from the multifunctional area and send it to a sorting position for sorting, which can accelerate order completion and effectively reduce the number of times of moving the goods shelf by the automatic handling device.

In addition, it should be noted that popular products can be stored directly in the multifunctional area during warehousing, or a popular product can be moved out of the warehousing area upon it is found, and is directly placed in the multifunctional area after sorting is completed.

That is, popular and best-selling products are more likely to be selected. When these items are desired at the sorting station, instead of calling the automatic handling device and a goods shelf, the container loading and unloading mechanism can directly take a container in this functional area and place it at the sorting station for sorting, which greatly improves the sorting efficiency, accelerates order completion, and effectively reduces the number of times of moving a goods shelf by the automatic handling device.

### Application scenario II

The multifunctional area is configured to store a second container. The second container is used for accommodating goods with a daily shipment quantity on the next day greater than a daily shipment quantity threshold.

It should be noted that the daily shipment quantity threshold refers to a specific value or a range of values of a shipment quantity of goods within a preset single day. The daily shipment quantity threshold depends on factors such as the type of goods and the season. For example, the daily shipment quantity of ice creams in summer is greater than that in winter.

When the warehousing system predicts, according to a reservation order or an actual daily shipment quantity of the goods on that day, that an actual daily shipment quantity of the goods on the next day will be greater than the daily shipment quantity threshold, the warehousing system calls the automatic handling device to move the goods shelf with the container that accommodates the goods to the goods shelf parking area, and the container loading and unloading device transfers the container from the goods shelf to the multifunctional area for temporary storage.

When the warehousing system receives an instruction of sorting the goods within the second container on the next day, the container loading and unloading device transfers the second container from the multifunctional area to the sorting station for the worker or sorting robot to perform sorting. After sorting is completed, the container loading and unloading device puts the second container with remaining goods back to the multifunctional area, or directly puts the empty second container back to a free-container storage area.

### Application scenario III

The multifunctional area is configured to store a third container. The third container is used for accommodating an item associated with designated goods. The item associated with the designated goods can be a gift of the designated goods. A gift refers to an item that is free of charge when a customer purchases the designated goods. Of course, the item associated with the designated goods can also be a commodity with a discounted price when it is placed on the same order as the designated goods.

The warehousing system calls the automatic handling device to move a goods shelf that stores a gift to the goods shelf parking area, and the container loading and unloading device transfers the third container with the gift from the goods shelf in the goods shelf parking area to the multifunctional area for temporary storage. When the warehousing system receives an instruction of sorting the designated goods associated with the gift, the warehousing system calls automatic handling device to move the goods shelf with the designated goods to the goods shelf parking area. The container loading and unloading device transfers a fourth container with the designated goods from the goods shelf in the goods shelf parking area to the sorting station in the workstation area. Then, or before this step, the container loading and unloading device transfers the third container with the gift from the multifunctional area to the sorting station for the worker or the sorting robot to perform sorting.

After sorting is completed, if there are still designated goods left in the fourth container, the container loading and unloading device puts the fourth container with the designated goods back onto the goods shelf, or directly puts the empty fourth container back to the free-container storage area. If there is still a gift left in the third container, the container loading and unloading device puts the third container back to the multifunctional area or puts the empty third container back to the free-container storage area.

In addition, it should be noted that gifts can be stored directly in the multifunctional area during warehousing, or a popular product can be moved out of the warehousing area upon it is found, and is directly placed in the multifunctional area after sorting is completed.

### Application scenario IV

The container loading and unloading device is configured to deploy positions of different containers on a goods shelf through the multifunctional area when it is free.

When the container loading and unloading device is free, the warehousing system calls the automatic handling device to move a goods shelf to the goods shelf parking area. According to the types of goods stored on the goods shelf and shipment quantities of the various types of goods in previous orders, the warehousing system deploys positions of different containers on the goods shelf, for example, moving a fifth container with goods with a higher shipment quantity to an outer side of a sixth container with goods with a lower shipment quantity, so as to shorten the sorting time and improve the sorting efficiency.

Detailedly, the warehousing system determines a shipment quantity of goods on a goods shelf on the basis of previous orders. If the fifth container with the goods with the high shipment quantity is located on an inner side of the sixth container with the goods with the low shipment quantity, the container loading and unloading device first transfers the sixth container with the goods with the low shipment quantity from the goods shelf to the multifunctional area for temporary storage, then transfers the fifth container with the goods with the high shipment quantity from the goods shelf to the multifunctional area for temporary storage, then puts the sixth container with the goods with the low shipment quantity back onto the goods shelf from the multifunctional area, and finally puts the sixth container with the goods with the high shipment quantity from the multifunctional area back onto the goods shelf and locate it on the outer side of the fifth container with the goods with the low shipment quantity for ease of grabbing.

Or, the container loading and unloading device deploys the fifth container with the goods with the high shipment quantity on the goods shelf to a lower place on the goods shelf, and deploys the sixth container with the goods with the low shipment quantity to a higher place on the goods shelf.

Detailedly, the warehousing system calls the automatic handling device to move a goods shelf to the goods shelf parking area, and predicts shipment quantity levels of the various types of goods on the goods shelf on the basis of the previous orders. Based on this, the container loading and unloading device first transfers the sixth container with the goods with the low shipment quantity on a lower place of the goods shelf to the multifunctional area for temporary storage, then rotates the fifth container with the goods with the high shipment quantity on a higher place on the goods shelf to the lower place, and then puts the sixth container temporarily stored in the multifunctional area back to the higher place on the goods shelf. The operations are repeated until all goods with high shipment quantities on the goods shelf are located below the goods with the low shipment quantity for ease of fetching and placing.

In addition, when the container loading and unloading device is free, if the warehousing system can receive an order of the next day in advance, the system can issue an instruction to control the automatic handling device to move containers associated with the order of the next day from a storage area to a workstation. The container loading and unloading device can transfer the containers desired by the order of the next day to one or more specific goods shelves. In the process that the container loading and unloading device transfers the containers to the one or more specific goods shelves, the containers can be temporarily stored in the multifunctional area. The one or more specific goods shelves are used for intensively storing the containers related to the order of the next day. After the one or more specific goods shelves finish collecting the containers, the automatic handling device can correspondingly move the specific goods shelves to the vicinity of the workstation area or to a warehousing area closer to the workstation, which can greatly improve the goods shelf selection rate on the next day.

That is, if the warehousing system can receive the order of the next day in advance, or make a prediction according to the order, the container loading and unloading device can automatically complete tallying between goods shelves during free time: The containers that need to be delivered out on the next day are intensively placed on certain goods shelves, which greatly improves the goods shelf selection rate of the next day and can effectively reduce the number of times of moving by the automatic handling device. The original scheme of automatic tallying only supports taking one and placing one, so that the tallying speed is low. After a functional area is added, taking more and placing more can be supported during tallying, which greatly improves the tallying efficiency.

In addition, the warehousing system is configured to use the multifunctional area to complete the tallying between the goods shelves during sorting.

Detailedly, when a sorting operation is performed manually, and the container loading and unloading device is in a free state, the multifunctional area can be used to complete the tallying between the goods shelves, that is, containers to be selected are intensively placed in some designated goods shelves to improve the goods shelf selection rate for subsequent sorting and reduce the number of times of moving by the automatic handling device.

### Application scenario V

The multifunctional area is configured to store an empty container.

The empty container is transferred by the container loading and unloading device from the container storage area to the multifunctional area. Or, the warehousing system calls the automatic handling device to transfer a goods shelf with an empty container to the goods shelf parking area, and then the container loading and unloading device transfers the empty container from the goods shelf to the multifunctional area for temporary storage.

When the warehousing system receives an instruction of shelving of a full container load or an alarm of a functionality shortage of external containers, the container loading and unloading device transfers an empty container from the multifunctional area to the sorting station, so that the worker or sorting robot sorts goods into the empty container.

It should be noted that the shelving of a full container load refers to fully filling a container with goods for overall sale.

### Application scenario VI

The multifunctional area is configured to be directly used as a sorting position.

Based on this, an operator can directly sort out goods from the multifunctional area, so as to reduce the number of times of moving by the automatic handling device, even directly reduce actions of the container loading and unloading device, and improves the overall efficiency.

### Application scenario VII

The multifunctional area is configured to be either located above or below the sorting station, or may be configured as a mobile goods shelf that can be moved by an automobile moving device, as long as the mobile goods shelf has the above temporary storage effect behind the workstation.

### Application scenario VIII

The multifunctional area is configured as a special storage position.

Detailedly, special containers with relatively large heights can be placed in the multifunctional area, such as containers that cannot be placed on goods shelves.

### Application scenario IX

The multifunctional area is configured to adjust a warehousing sequence.

Detailedly, the warehousing system first puts all or most of containers to be warehoused to the multifunctional area, and then these containers in the multifunctional area according to the sequence of the containers in a warehousing order, and finally uses the container loading and unloading device to place the containers onto target storage positions of designated goods shelves, so as to reduce the number of times of moving containers by the automatic handling device and improve the warehousing efficiency.

### Application scenario X

The multifunctional area is configured to adjust a sequence of boxes to be shelved.

Detailedly, the warehousing system first puts all or most of containers to be shelved to the multifunctional area, and then these containers in the multifunctional area according to the sequence of the containers in a shelving order, and finally uses the container loading and unloading device to place the containers onto target storage positions of designated goods shelves, so as to reduce the number of times of moving containers by the automatic handling device and improve the shelving efficiency.

The present disclosure further provides a control method of a warehousing system. The warehousing system is the foregoing warehousing system. The control method of the warehousing system includes the following main steps:
The container loading and unloading device transfers a container satisfying a preset attribute among the workstation area, the goods shelf parking area, and the multifunctional area on the basis of the preset attribute.

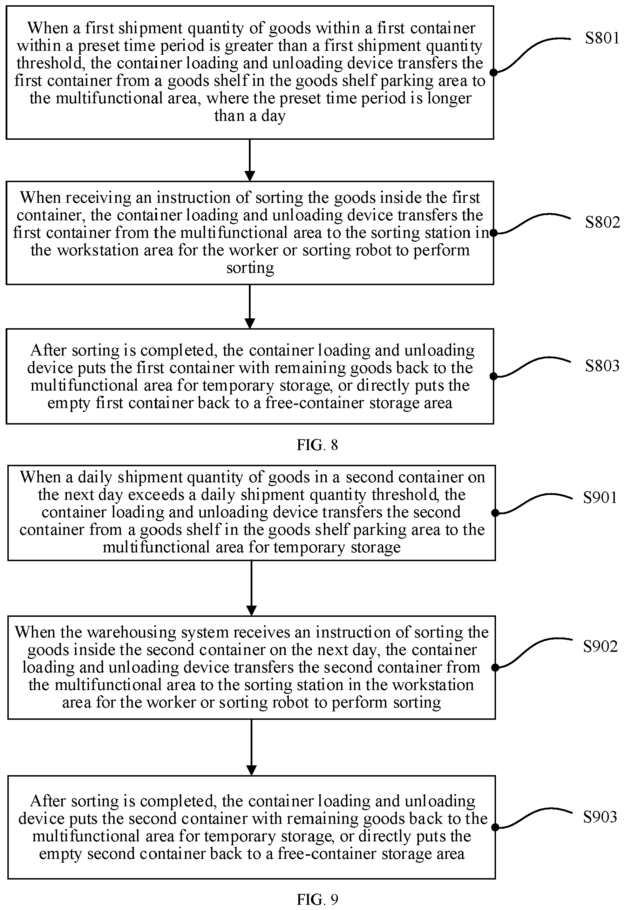

For ease of a better understanding, a specific control logic of the control method of the present disclosure will be described in detail using four embodiments below in conjunction with FIG. 8 to FIG. 10.

### Embodiment VII of the control method

Referring to FIG. 8, in this embodiment, the control method of the warehousing system includes the following steps.

S801. When a first shipment quantity of goods within a first container within a preset time period is greater than a first shipment quantity threshold, the container loading and unloading device transfers the first container from a goods shelf in the goods shelf parking area to the multifunctional area. The preset time period is longer than a day.

The preset time period is one week, one month, one quarter, one year, or the like. The first shipment quantity threshold refers to a specific value or a range of values preset according to an annual shipment quantity, a quarterly shipment quantity, a monthly shipment quantity, a weekly shipment quantity, and the like.

When an actual first shipment quantity of the goods within the preset time period is equal to the first shipment quantity threshold, it indicates that the first shipment quantity of the goods is at a normal level. When the first shipment quantity of the goods within the preset time period exceeds the first shipment quantity threshold, it indicates that the goods are popular or best-selling products. On the contrary, when an actual first shipment quantity of the goods within the preset time period is less than the first shipment quantity threshold, it indicates that the goods are slow-selling products.

When the warehousing system detects, according to the first shipment quantity within the preset time period, that the goods stored in the first container are the popular or best-selling products, namely, that the actual first shipment quantity of the goods within the preset time is greater than the first shipment quantity threshold, the container loading and unloading device of the warehousing system grabs the first container from the goods shelf in the goods shelf parking area and transfers the first container to the multifunctional area for temporary storage.

S802. When an instruction of sorting the goods inside the first container is received, the container loading and unloading device transfers the first container from the multifunctional area to the sorting station in the workstation area for the worker or sorting robot to perform sorting.

Of course, in some other embodiments, the sorting personnel can also directly transfer the first container from the multifunctional area to the sorting station in the workstation area, without using the container loading and unloading device.

S803. After sorting is completed, the container loading and unloading device puts the first container with remaining goods back to the multifunctional area for temporary storage, or directly puts the empty first container back to a free-container storage area.

Detailedly, a sorting system can identify materials that are currently not desired but will be selected after a period of time. After the multifunctional area is set up, the system can pull more materials than those desired by an existing planting wall, that is, there are materials in a goods shelf that are desired in the existing planting wall. At the same time, if there is still a material that will be used after a period of time, the container loading and unloading device can remove the pre-selected material from the goods shelf and temporarily place it in the multifunctional area. When the material is desired, the container loading and unloading device is directly used to take the material or a container with the material from the multifunctional area and send it to a sorting position for sorting, which can accelerate order completion and effectively reduce the number of times of moving the goods shelf by the automatic handling device.

In addition, it should be noted that popular products can be stored directly in the multifunctional area during warehousing, or a popular product can be moved out of the warehousing area upon it is found, and is directly placed in the multifunctional area after sorting is completed.

### Embodiment VIII of the control method

Referring to FIG. 9, in this embodiment, the control method of the warehousing system includes the following steps.

S901. When a daily shipment quantity of goods in a second container on the next day exceeds a daily shipment quantity threshold, the container loading and unloading device transfers the second container from a goods shelf in the goods shelf parking area to the multifunctional area for temporary storage.

It should be noted that the daily shipment quantity threshold refers to a specific value or a range of values of a shipment quantity of goods within a preset single day. The daily shipment quantity threshold depends on factors such as the type of goods and the season. For example, the daily shipment quantity of ice creams in summer is greater than that in winter.

Detailedly, in one embodiment, after receiving a next-day reservation order, the warehousing system compares a daily shipment quantity of target goods on the next-day reservation order with the daily shipment quantity threshold, and places the target goods in the second container. When the daily shipment quantity of the target goods on the next-day reservation order exceeds the daily shipment quantity threshold, the warehousing system calls the automatic handling device to move a goods shelf that stores the second container to the goods shelf parking area. The container loading and unloading device transfers the second container from the goods shelf in the goods shelf parking area to the multifunctional area for temporary storage.

In another embodiment, when the warehousing system predicts, according to an actual shipment quantity of the target goods on that day, that the daily shipment quantity of target goods on the next day will exceed the daily shipment quantity threshold of the target goods, the target goods are placed in the second container, and the warehousing system calls the automatic handling device to move a goods shelf that stores the second container to the goods shelf parking area, and the container loading and unloading device transfers the second container from the goods shelf in the goods shelf parking area to the multifunctional area for temporary storage.

For example, for goods, such as fruits and vegetables, with shipment quantities affected by the season, when the warehousing system obtains that the daily shipment quantity of Xantolis stenosepala [Hu] V. Royen on October 10^{th} in late autumn far exceeds a preset daily shipment quantity threshold for the goods. Based on this, the warehousing system predicts that a daily shipment quantity of the Xantolis stenosepala [Hu] V. Royen on the next day will also exceed its daily shipment quantity threshold. The warehousing system calls the automatic handling device to move a goods shelf that stores the second container to the goods shelf parking area. The container loading and unloading device transfers the second container from the goods shelf in the goods shelf parking area to the multifunctional area for temporary storage, and the second container has stored the target goods, namely, the Xantolis stenosepala [Hu] V. Royen.

S902. When the warehousing system receives an instruction of sorting the goods inside the second container on the next day, the container loading and unloading device transfers the second container from the multifunctional area to the sorting station in the workstation area for the worker or sorting robot to perform sorting.

S903. After sorting is completed, the container loading and unloading device puts the second container with remaining goods back to the multifunctional area for temporary storage, or directly puts the empty second container back to a free-container storage area.

### Embodiment IX of the control method

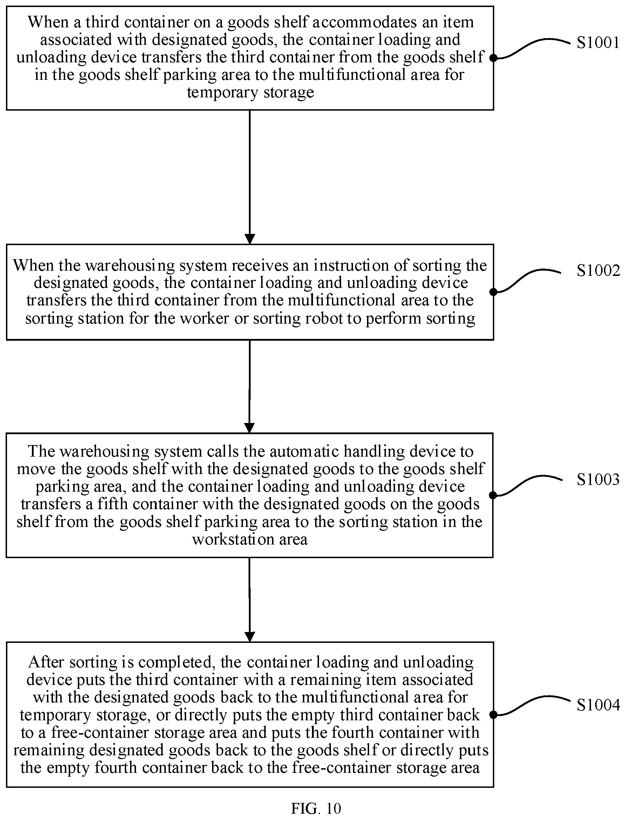

Referring to FIG. 10, in this embodiment, the control method of the warehousing system includes the following steps.

S1001. When a third container on a goods shelf accommodates an item associated with designated goods, the container loading and unloading device transfers the third container from the goods shelf in the goods shelf parking area to the multifunctional area for temporary storage.

The item associated with the designated goods can be a gift of the designated goods. A gift refers to an item that is free of charge when a customer purchases the designated goods. Of course, the item associated with the designated goods can also be a commodity with a discounted price when it is placed on the same order as the designated goods.

Before step S1001, the control method further includes: the automatic handling device is called to move the goods shelf that stores the third container to the goods shelf parking area.

S1002. When the warehousing system receives an instruction of sorting the designated goods, the container loading and unloading device transfers the third container from the multifunctional area to the sorting station for the worker or sorting robot to perform sorting.

Before or after step S1002, the control method further includes step S1003. The warehousing system calls the automatic handling device to move the goods shelf with the designated goods to the goods shelf parking area, and the container loading and unloading device transfers a fifth container with the designated goods on the goods shelf from the goods shelf parking area to the sorting station in the workstation area.

S 1004. After sorting is completed, the container loading and unloading device puts the third container with a remaining item associated with the designated goods back to the multifunctional area for temporary storage, or directly puts the empty third container back to a free-container storage area and puts the fourth container with remaining designated goods back to the goods shelf or directly puts the empty fourth container back to the free-container storage area.

In addition, it should be noted that the item associated with the designated goods can be directly stored in the multifunctional area during warehousing, or a popular product can be moved out of a warehousing area upon it is found, and is directly placed in the multifunctional area after sorting is completed.

### Embodiment X of the control method

In this embodiment, the control method of the warehousing system includes the following steps.

When the container loading and unloading device is free, the container loading and unloading device deploys positions of different containers on a goods shelf through the multifunctional area.

When the container loading and unloading device is free, the warehousing system calls the automatic handling device to move a goods shelf to the goods shelf parking area. According to the types of goods stored on the goods shelf and shipment quantities of the various types of goods in previous orders, the warehousing system deploys positions of different containers on the goods shelf, for example, moving a fifth container with goods with a higher shipment quantity to an outer side of a sixth container with goods with a lower shipment quantity, so as to shorten the sorting time and improve the sorting efficiency.

Detailedly, the warehousing system determines a shipment quantity of goods on a goods shelf on the basis of previous orders. If the fifth container with the goods with the high shipment quantity is located on an inner side of the sixth container with the goods with the low shipment quantity, the container loading and unloading device first transfers the sixth container with the goods with the low shipment quantity from the goods shelf to the multifunctional area for temporary storage, then transfers the fifth container with the goods with the high shipment quantity from the goods shelf to the multifunctional area for temporary storage, then puts the sixth container with the goods with the low shipment quantity back onto the goods shelf from the multifunctional area, and finally puts the fifth container with the goods with the high shipment quantity from the multifunctional area back onto the goods shelf and locate it on the outer side of the sixth container with the goods with the low shipment quantity for ease of grabbing.

Or, the container loading and unloading device deploys the fifth container with the goods with the high shipment quantity on the goods shelf to a lower place on the goods shelf, and deploys the sixth container with the goods with the low shipment quantity to a higher place on the goods shelf.

Detailedly, the warehousing system calls the automatic handling device to move a goods shelf to the goods shelf parking area, and predicts shipment quantity levels of the various types of goods on the goods shelf according to previous orders. Based on this, the container loading and unloading device first transfers the sixth container with the goods with the low shipment quantity on a lower place on the goods shelf to the multifunctional area for temporary storage, then rotates the fifth container with the goods with the high shipment quantity on a higher place on the goods shelf to the foregoing lower place, and then puts the sixth container temporarily stored in the multifunctional area back to the higher place on the goods shelf. The operations are repeated until all goods with high shipment quantities on the goods shelf are located below the goods with the low shipment quantity for ease of fetching and placing.

### Embodiment XI of the control method

In this embodiment, the control method of the warehousing system includes the following steps.

An empty container is stored in the multifunctional area.

It should be noted that the empty container can be stored on a goods shelf in advance. The warehousing system calls the automatic handling device to move the goods shelf to the goods shelf parking area, and the container loading and unloading device transfers the empty container from the goods shelf to the multifunctional area for temporary storage.

When the warehousing system receives an instruction of shelving of a full container load or an alarm of a shortage of externally supplied containers, the container loading and unloading device transfers an empty container from the multifunctional area to the sorting station, so that the worker or sorting robot sorts goods into the empty container.

It should be noted that the shelving of a full container load refers to fully filling a container with goods for overall sale.

It should be finally noted that the above embodiments are only specific embodiments of the present disclosure and are intended to explain the technical solutions of the present disclosure, not to limit the technical solutions. The protection scope of the present disclosure is not limited to this. Although the present disclosure has been described in detail with reference to the foregoing embodiments, those of ordinary skill in the art should understand that any person skilled in the art still can make modifications to the technical solutions in the foregoing embodiments or can easily think of changes of the technical solutions within the technical scope disclosed in the present disclosure, or can make equivalent replacements to part of the technical features. These modifications, changes or replacements will not make the essences of the corresponding technical solutions depart from the spirit and scope of the technical solutions of the embodiments of the present disclosure, and shall all fall within the protection scope of the present disclosure. Therefore, the protection scope of the present disclosure shall be based on the protection scope of the claims.

## Claims

1. A warehousing system, comprising:
a workstation area comprising at least one sorting station;
a goods shelf parking area configured to park a goods shelf;
a multifunctional area comprising at least one storage position, and the storage position being configured to store a container transferred from the sorting station or the goods shelf; and
a container loading and unloading device configured to transfer the container among the workstation area, the goods shelf parking area, and the multifunctional area.

2. The warehousing system according to claim 1, wherein the multifunctional area is located above, below or next to the sorting station.

3. The warehousing system according to claim 1, wherein the storage position is configured to store the container, and a demand frequency of goods in the container within a preset time period exceeds a demand frequency threshold.

4. The warehousing system according to claim 1, wherein the storage position of the multifunctional area is configured to store the container, and goods in the container are associated with designated goods.

5. The warehousing system according to claim 1, wherein the multifunctional area is configured to store the container, sorting of goods in the container has been completed, and the container loading and unloading device is not free to transfer the container.

6. The warehousing system according to claim 1, wherein the multifunctional area is configured to store the container, sorting of goods in the container has been completed, and a goods shelf for storing the container has not yet reached the goods shelf parking area.

7. The warehousing system according to claim 1, wherein the multifunctional area is configured to store the container, sorting of goods in the container has been completed, and the goods are selected in an order to be sorted.

8. The warehousing system according to claim 1, wherein the container loading and unloading device is further configured to perform a tallying operation.

9. The warehousing system according to claim 8, wherein within a preset time period, when a demand frequency of goods in a first container is greater than a demand frequency of goods in a second container, and a position of the second container on the goods shelf is more convenient for fetching and placing than the first container,
the container loading and unloading device is configured to move the second container from the goods shelf to the multifunctional area for temporary storage, transfers the first container from a current position to an original position of the second container, and transfers the second container from the multifunctional area to an original position of the first container.

10. The warehousing system according to claim 8, wherein when a demand frequency of goods in the container within a preset time period exceeds a demand frequency threshold,
the container loading and unloading device is configured to transfer the container from a current goods shelf to a new goods shelf, and the new goods shelf is configured to specially store the container in which the demand frequency of the goods within the preset time period exceeds the demand frequency threshold.

11. The warehousing system according to claim 1, wherein the container loading and unloading device is configured to put an empty container back to a goods shelf for storing empty containers or the multifunctional area.

12. The warehousing system according to any one of claims 1 to 11, wherein the multifunctional area comprises a plurality of storage positions, and the plurality of storage positions are arranged at intervals in a height direction, arranged at intervals in a horizontal direction, or arranged at intervals in both the height direction and the horizontal direction.

13. The warehousing system according to any one of claims 1 to 11, wherein the warehousing system further comprises an automatic handling device, and the automatic handling device is configured to move the goods shelf into or out of the goods shelf parking area.

14. The warehousing system according to claim 13, wherein the warehousing system comprises a plurality of sorting stations, and the plurality of sorting stations are arranged at intervals in a horizontal direction.

15. The warehousing system according to claim 14, wherein the sorting station comprises a first supporting frame and a first guide mechanism arranged on the first supporting frame, and the first guide mechanism is configured to assist the container loading and unloading device in fetching and placing the container.

16. The warehousing system according to any one of claims 1 to 11, wherein the storage position comprises a second supporting frame and a second guide mechanism arranged on the second supporting frame, and the second guide mechanism is configured to assist the container loading and unloading device in fetching and placing the container.

17. The warehousing system according to any one of claims 1 to 11, wherein the container loading and unloading device comprises a portal frame and a loading and unloading component, the loading and unloading component is arranged on the portal frame, and the loading and unloading component is configured to move in an X-axis direction and a Y-axis direction relative to the portal frame; or
the loading and unloading component is configured to move in a Z-axis direction and the Y-axis direction relative to the portal frame; or
the loading and unloading component is configured to move in the X-axis direction, the Y-axis direction, and the Z-axis direction relative to the portal frame;
a direction of a vertical distance between the sorting station and the goods shelf is denoted as the Y-axis direction, a direction perpendicular to a Y axis in a horizontal plane is denoted as the X-axis direction, and a direction perpendicular to the horizontal plane is denoted as the Z-axis direction.

18. The warehousing system according to claim 17, wherein the loading and unloading component is configured to move in the X-axis direction, the Y-axis direction, and the Z-axis direction relative to the portal frame, and the container loading and unloading device further comprises:
a movable vertical column arranged on the portal frame and configured to be controlled by an X-axis driving mechanism to move in the X-axis direction relative to the portal frame; and
the loading and unloading component is arranged on the movable vertical column and is configured to be controlled by a Z-axis driving mechanism to move in the Z-axis direction relative to the movable vertical column.

19. The warehousing system according to claim 18, wherein the loading and unloading component comprises:
a base arranged on the movable vertical column; and
a loading and unloading component arranged on the base and configured to be controlled by a Y-axis driving mechanism to move in the Y-axis direction relative to the base.

20. The warehousing system according to claim 19, wherein the container loading and unloading device further comprises:
an X-axis guide mechanism arranged on the portal frame and configured to guide the movable vertical column to move in the X-axis direction relative to the portal frame; and/or
a Z-axis guide mechanism arranged on the movable vertical column and configured to guide the loading and unloading component to move in the Z-axis direction relative to the movable vertical column.

21. The warehousing system according to claim 1, wherein the multifunctional area is configured to store an empty container, and the container loading and unloading device is configured to transfer the empty container of the multifunctional area to the sorting station in case of shelving of a full container load or a shortage of externally supplied containers.

22. A control method of a warehousing system, wherein the warehousing system is a warehousing system according to any one of claims 1 to 21, and the control method comprises:
transferring, by the container loading and unloading device, a target container satisfying a preset attribute among the workstation area, the goods shelf parking area, and the multifunctional area on the basis of the preset attribute.

23. The control method according to claim 22, wherein the transferring, by the container loading and unloading device, the target container satisfying the preset attribute among the workstation area, the goods shelf parking area, and the multifunctional area comprises:
when a demand frequency of goods in the container within a preset time period exceeds a demand frequency threshold, transferring, by the container loading and unloading device, the container from the goods shelf in the goods shelf parking area to the multifunctional area; and
when an instruction of sorting the goods is received, transferring, by the container loading and unloading device, the container from the multifunctional area to the sorting station.

24. The control method according to claim 22, wherein the transferring, by the container loading and unloading device, the target container satisfying the preset attribute among the workstation area, the goods shelf parking area, and the multifunctional area comprises:
when a first container accommodates an item associated with designated goods, transferring, by the container loading and unloading device, the first container from the goods shelf to the multifunctional area for temporary storage;
when an instruction of sorting the designated goods is received, transferring, by the container loading and unloading device, the first container from the multifunctional area to the sorting station; and
transferring, by the container loading and unloading device, a second container storing the designated goods from the goods shelf in the goods shelf parking area to the sorting station.

25. The control method according to claim 22, wherein the transferring, by the container loading and unloading device, the target container satisfying the preset attribute among the workstation area, the goods shelf parking area, and the multifunctional area comprises:
when sorting of goods in the container is completed, and the container loading and unloading device is not free to transfer the container, storing the container in the multifunctional area.

26. The control method according to claim 22, wherein the transferring, by the container loading and unloading device, the target container satisfying the preset attribute among the workstation area, the goods shelf parking area, and the multifunctional area comprises:
when sorting is completed, and a goods shelf for placing the container has not yet reached the goods shelf parking area, storing, by the container loading and unloading device, the container in the multifunctional area.

27. The control method according to claim 22, wherein the transferring, by the container loading and unloading device, the target container satisfying the preset attribute among the workstation area, the goods shelf parking area, and the multifunctional area comprises:
when the container loading and unloading device is free, performing a tallying operation by the container loading and unloading device.

28. The control method according to claim 27, wherein a method for performing the tallying operation by the container loading and unloading device comprises:
within a preset time period, when a demand frequency of goods in a first container is greater than a demand frequency of goods in a second container, and a position of the second container on the goods shelf is more convenient for fetching and placing than the first container, first moving, by the container loading and unloading device, the second container from the goods shelf to the multifunctional area for temporary storage;
transferring, by the container loading and unloading device, the first container from a current position to an original position of the second container; and
transferring, by the container loading and unloading device, the second container from the multifunctional area to an original position of the first container.

29. The control method according to claim 27, wherein a method for performing the tallying operation by the container loading and unloading device comprises:
within a preset time period, when a demand frequency of goods in the container exceeds a demand frequency threshold, transferring, by the container loading and unloading device, the container from a current goods shelf to a new goods shelf, wherein the new goods shelf is configured to specially store the container in which the demand frequency of the goods within the preset time period exceeds the demand frequency threshold.

30. The control method according to claim 27, wherein a method for performing the tallying operation by the container loading and unloading device comprises:
within a preset time period, when a demand frequency of goods in the container exceeds a preset degree threshold, transferring, by the container loading and unloading device, the container from the multifunctional area to a new goods shelf, wherein the new goods shelf is configured to specially store the container in which the demand frequency of the goods within the preset time period exceeds the demand frequency threshold.

31. The control method according to claim 22, wherein the transferring, by the container loading and unloading device, the target container satisfying the preset attribute among the workstation area, the goods shelf parking area, and the multifunctional area comprises:
when the multifunctional area stores an empty container, and an instruction of shelving a full container load or an alarm of a shortage of externally supplied containers is received, transferring, by the container loading and unloading device, the empty container of the multifunctional area to the sorting station.

32. The control method according to claim 22, wherein the transferring, by the container loading and unloading device, the target container satisfying the preset attribute among the workstation area, the goods shelf parking area, and the multifunctional area comprises:
when the container is empty after sorting is completed, transferring, by the container loading and unloading device, the empty container from the sorting station to a new goods shelf, wherein the new goods shelf is configured to specially store the empty container.

33. The control method according to claim 22, wherein the transferring, by the container loading and unloading device, the target container satisfying the preset attribute among the workstation area, the goods shelf parking area, and the multifunctional area comprises:
after sorting of goods in the container is completed, determining whether the goods are selected in an order to be sorted;
if the goods are selected in the order to be sorted, transferring, by the container loading and unloading device, the container from the sorting station to the multifunctional area for temporary storage; and
after receiving an instruction of sorting the order to be sorted in which the goods are selected, transferring, by the container loading and unloading device, the container from the multifunctional area to the sorting station.

34. The control method according to claim 22, wherein the warehousing system further comprises an automatic handling device, the automatic handling device is configured to move the goods shelf into or out of the goods shelf parking area, and the control method further comprises:
when one container accommodates an item associated with designated goods, transferring, by the container loading and unloading device, the one container from the goods shelf to the multifunctional area for temporary storage;
when an instruction of sorting the designated goods is received, transferring, by the container loading and unloading device, the one container from the multifunctional area to the sorting station; and
calling the automatic handling device to move a goods shelf storing another container to the goods shelf parking area, and transferring, by the container loading and unloading device, the other container from the goods shelf of the goods shelf parking area to the sorting station, wherein the other container is configured to accommodate the designated goods.
